# EUROPEAN PATENT APPLICATION

(11) **EP 3 118 712 A1**
(43) Date of publication of application: **18.01.2017**
(21) Application number: 16167772.9
(22) Date of filing: 29.04.2016
(51) Int. Cl.: G06F 1/16, G06F 3/041, G06F 3/046, G06F 3/0488

(54) **COVER AND ELECTRONIC DEVICE INCLUDING THE SAME**

(30) Priority: 30.04.2015 KR 20150062117; 30.06.2015 KR 20150093840; 12.08.2015 KR 20150114139
(71) Applicant: Samsung Electronics Co., Ltd, Gyeonggi-do 16677 (KR)
(72) Inventor: KIM, Hyun-Chul, Gyeonggi-do 16677 (KR); WANG, Sang-Jin, Gyeonggi-do 16677 (KR); YUN, Suk-Jin, Gyeonggi-do 16677 (KR); MO, Sang-Joon, Gyeonggi-do 16677 (KR); LEE, Sung-Yeon, Gyeonggi-do 16677 (KR)
(74) Representative: Gover, Richard Paul

(57) **Abstract**

A cover of an electronic device includes a rear cover mounted on a rear surface of the electronic device; and a cover, comprising a plurality of keys, which is detachably coupled to the rear cover to face one of a front surface and a rear surface of the rear cover. The cover comprising the plurality of keys comprises one or more mechanically operated switch members (e.g. dome switches), which may operate on a virtual keyboard on a touch display underneath the keys.

## Description

### TECHNICAL FIELD

The present disclosure relates to a cover and an electronic device including the same.

### BACKGROUND

Electronic devices perform specific functions according to programs installed therein, such as electronic diaries, portable multimedia players, mobile communication terminals, tablet personal computers (PCs), video/audio devices, desktop/laptop computers, navigation systems for vehicles, etc. For example, electronic devices may output information stored therein as sounds or images. With the increased integration of electronic devices and the popularization of high-speed and high-capacity wireless communication, mobile communication terminals include various functions. For example, a mobile device may include a communication function, an entertainment function, a multimedia function, a communication and security function for mobile banking, a scheduling function, and an electronic wallet function. Portable electronic devices (for example, electronic diaries, portable multimedia players, mobile communication terminals, tablet PCs, etc.) generally have touch screens and are classified into a bar type electronic device, a folder type electronic device, and a slide type.

These electronic devices have various types of input devices. For example, desktop computers include physical input devices, such as keyboards and mice, and home appliances are provided with remote controlled input devices. Some electronic devices include touch screens that display screens of electronic devices and receive input data by detecting touch input. The touch screens may detect touches of users' bodies, for example fingers, through touch panels that are implemented in a capacitive or resistive type. Further, portable keypads or keyboards that operate in conjunction with portable electronic devices have been commercialized for users to effectively work on documents on the portable electronic devices, or to conveniently utilize applications of the portable electronic devices.

By virtue of the compactness of the electronic devices, users use the electronic devices while moving, with the electronic devices carried by their hands or preserved in pockets or bags, and covers are mounted on the electronic devices to protect the electronic devices from damage.

The above information is presented as background information only to assist with an understanding of the present disclosure. No determination has been made, and no assertion is made, as to whether any of the above might be applicable as prior art with regard to the present disclosure.

### SUMMARY

Portable keyboards have been commercialized in order to input information to portable electronic devices, but users may have to separately carry the portable electronic devices and the portable keyboards (or keypads).

Further, touch screens equipped to commercialized electronic devices detect users' touches to receive input signals, but the touch screens may have a lower input accuracy than portable keypads.

Aspects of the present disclosure are to address at least the above-mentioned problems and/or disadvantages and to provide at least the advantages described below. Accordingly, an aspect of the present disclosure is to provide a cover in which a keypad is provided to be mountable, thereby improving the portability of the keypad.

Another aspect of the present disclosure is to provide a cover in which an input signal can be transmitted to an electronic device by using a keypad, thereby improving the accuracy and speed of input.

Another aspect of the present disclosure is to provide a cover that can also provide a click feeling of a physical keypad in an input operation through a touch screen.

Another aspect of the present disclosure is to provide a cover that includes various specialized functions in addition to the above-described keypad function.

In accordance with an aspect of the present disclosure, a cover of an electronic device is provided. The cover of the electronic device includes a rear cover mounted on a rear surface of the electronic device, and a cover, comprising a plurality of keys, that is detachably coupled to the rear cover, wherein the cover comprising the plurality of keys is coupled to face one of a front surface and a rear surface of the rear cover, and wherein the cover comprising the plurality of keys comprises mechanically operated switch members.

In accordance with another aspect of the present disclosure, a method of controlling a screen of a touch screen of an electronic device is provided. The method includes detecting the attachment of a cover that includes a plurality of keys, configuring a screen to display in the remaining area other than the area of the cover comprising the plurality of keys, and displaying the configured screen in the remaining area.

In accordance with another aspect of the present disclosure, an electronic device that controls a screen of a touch screen is provided. The electronic device includes a touch screen configured to display a screen, and a controller configured to detect the attachment of a cover that comprises a plurality of keys, and configure a screen to display in the remaining area other than the area of the cover, wherein the touch screen is configured to display the configured screen in the remaining area.

In accordance with another aspect of the present disclosure, the cover that includes the plurality of keys is detachably provided on the rear cover so that a user can mount the cover, which includes the plurality of keys, on the front surface of an electronic device if it is needed to use the cover as an input device, or when the user wants to view the whole display of the electronic device, the user can mount the cover, which includes the plurality of keys, on the rear surface of the rear cover to conveniently carry the electronic device.

In addition, the cover that includes the plurality of keys, according to the various embodiments of the present disclosure, includes the mechanically operated switch members so that a user can enter an input while feeling a sense of pressing the switch members, thereby improving the accuracy and speed of the user input.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a front perspective view of an electronic device equipped with a cover according to various embodiments of the present disclosure;
FIG. 2 is a rear perspective view of an electronic device equipped with a cover according to various embodiments of the present disclosure;
FIG. 3 is a front view of a cover according to various embodiments of the present disclosure;
FIG. 4 is a side view of a cover according to various embodiments of the present disclosure;
FIG. 5 is an exploded perspective view of a keypad cover according to various embodiments of the present disclosure;
FIG. 6 is a cross-sectional view illustrating the keypad cover of FIG. 5 coupled to a rear cover according to various embodiments of the present disclosure;
FIG. 7 is an exploded perspective view of a keypad according to various embodiments of the present disclosure;
FIG. 8 is a cross-sectional view illustrating the keypad cover of FIG. 7 coupled to cover a rear cover according to various embodiments of the present disclosure;
FIG. 9 is a perspective view illustrating a part of a keypad cover according to various embodiments of the present disclosure;
FIG. 10 is a cross-sectional view illustrating a part of a keypad cover according to various embodiments of the present disclosure;
FIG. 11 is a perspective view of an electronic device according to various embodiments of the present disclosure;
FIG. 12 is a rear perspective view of a keypad cover according to various embodiments of the present disclosure;
FIG. 13 is a cross-sectional view illustrating a first home key of an electronic device and a second home key of a cover according to various embodiments of the present disclosure;
FIG. 14 is a cross-sectional view of a cover according to various embodiments of the present disclosure;
FIG. 15 is a cross-sectional view illustrating an electronic device and a cover according to various embodiments of the present disclosure;
FIG. 16 is a block diagram of an electronic device that controls a touch screen according to various embodiments of the present disclosure;
FIG. 17 is a flowchart of a process for controlling a touch screen of an electronic device according to various embodiments of the present disclosure;
FIG. 18A illustrates a main screen on a touch screen according to an embodiment of the present disclosure;
FIG. 18B illustrates a screen that is displayed when a keypad cover is mounted on a front surface of an electronic device according to an embodiment of the present disclosure;
FIG. 19A illustrates a screen displaying a keypad for a telephone call according to an embodiment of the present disclosure;
FIG. 19B illustrates a screen that is configured to correspond to a keypad cover mounted on the front surface of an electronic device while the keypad is displayed according to an embodiment of the present disclosure;
FIG. 19C illustrates an example a screen for a media player according to an embodiment of the present disclosure;
FIG. 19D illustrates an example screen that is configured to correspond to a keypad cover mounted on the front surface of the electronic device while the screen for the media player is displayed according to an embodiment of the present disclosure, where the keypad cover includes a plurality of keys;
FIG. 19E illustrates an example screen for creating a message according to an embodiment of the present disclosure;
FIG. 19F illustrates an example screen that is configured to correspond to a keypad cover mounted on the front surface of the electronic device while the screen for creating a message is displayed according to an embodiment of the present disclosure;
FIG. 20 is a front perspective view of an electronic device equipped with a cover according to various embodiments of the present disclosure;
FIG. 21 is a front view of the cover illustrated in FIG. 20 according to various embodiments of the present disclosure;
FIG. 22 is a front view of a keypad cover according to various embodiments of the present disclosure;
FIG. 23 is a front view of a cover that includes a plurality of keys according to various embodiments of the present disclosure;
FIG. 24 is a front view of a cover that includes a plurality of keys according to various embodiments of the present disclosure;
FIG. 25 is a front view of a cover that includes a plurality of keys according to various embodiments of the present disclosure;
FIG. 26 is a front view of a cover according to various embodiments of the present disclosure;
FIG. 27 is a side view of the cover of FIG. 26 according to an embodiment of the present disclosure;
FIG. 28 is a rear view of the cover of FIG. 26 according to an embodiment of the present disclosure;
FIG. 29 is an exploded perspective view of the cover of FIG. 26 according to an embodiment of the present disclosure;
FIG. 30 is a side view of a cover according to an embodiment of the present disclosure;
FIG. 31 is a sectional view taken along line A-A' of the cover illustrated in FIG. 30 according to an embodiment of the present disclosure;
FIG. 32 is a view of a second cover member of a cover to which an external force is applied according to an embodiment of the present disclosure;
FIG. 33 is a view illustrating a keypad housing and switch members of a second cover member of a cover according to various embodiments of the present disclosure;
FIG. 34 is an exploded perspective view of a second cover member of a cover according to an embodiment of the present disclosure;
FIG. 35 is a different exploded perspective view of the second cover member of the cover of FIG. 34 according to an embodiment of the present disclosure;
FIG. 36 is a front view of a second cover member of a cover according to an embodiment of the present disclosure;
FIG. 37 is a sectional view taken along line B-B' of the second cover member illustrated in FIG. 36 according to an embodiment of the present disclosure;
FIG. 38 is an enlarged view of the portion E illustrated in FIG. 37 according to an embodiment of the present disclosure;
FIG. 39 is a rear view of a circuit board of a cover according to an embodiment of the present disclosure; and
FIG. 40 is a rear view of a circuit board of a cover according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the present disclosure, the expression "have", "may have", "include" or "may include" refers to existence of a corresponding feature (e.g., numerical value, function, operation, or components such as elements), and does not exclude existence of additional features.

In the present disclosure, the expression "A or B", "at least one of A or/and B", or "one or more of A or/and B" may include all possible combinations of the items listed. For example, the expression "A or B", "at least one of A and B", or "at least one of A or B" refers to all of (1) including at least one A, (2) including at least one B, or (3) including all of at least one A and at least one B.

The expression "a first", "a second", or other numeric identifiers used in various embodiments of the present disclosure may modify various components regardless of the order and/or the importance but does not limit the corresponding components. For example, a first user device and a second user device indicate different user devices although both of them are user devices. For example, a first element may be termed a second element, and similarly, a second element may be termed a first element without departing from the scope of the present disclosure.

It should be understood that when an element (e.g., a first element) is referred to as being (operatively or communicatively) "connected," or "coupled," to another element (e.g., second element), it may be directly connected or coupled directly to the other element or any other element (e.g., third element) may be interposed between them. In contrast, when an element (e.g., first element) is referred to as being "directly connected," or "directly coupled" to another element (second element), there is no element (e.g., third element) interposed between them.

The terms used herein are merely for the purpose of describing particular embodiments and are not intended to limit the scope of other embodiments. As used herein, singular forms may include plural forms as well unless the context clearly indicates otherwise. Unless defined otherwise, all terms used herein, including technical and scientific terms, have the same meaning as those commonly understood by a person skilled in the art to which the present disclosure pertains. Such terms as those defined in a generally used dictionary may be interpreted to have the meanings equal to the contextual meanings in the relevant field of art, and are not to be interpreted to have ideal or excessively formal meanings unless clearly defined in the present disclosure. In some cases, even the term defined in the present disclosure should not be interpreted to exclude embodiments of the present disclosure.

In the present disclosure, an electronic device may be called a terminal, a portable terminal, a mobile terminal, a communication terminal, a portable communication terminal, a portable mobile terminal, a touch screen or the like.

For example, the electronic device may be a smartphone, a portable phone, a game player, a television (TV), a display unit, a heads-up display unit for a vehicle, a notebook personal computer (PC), a laptop PC, a tablet PC, a personal media player (PMP), a personal digital assistants (PDA), and the like. The electronic device may be implemented as a portable communication terminal which has a wireless communication function and a pocket size. Further, the electronic device may be a flexible device or include a flexible touch screen.

The electronic device may communicate with an external electronic device, such as a server or the like, or perform an operation in conjunction with the external electronic device. For example, the electronic device may transmit an image photographed by a camera and/or position information detected by a sensor unit to the server through a network. The network may be a mobile or cellular communication network, a local area network (LAN), a wireless local area network (WLAN), a wide area network (WAN), an Internet, a small area network (SAN) or the like, but is not limited thereto.

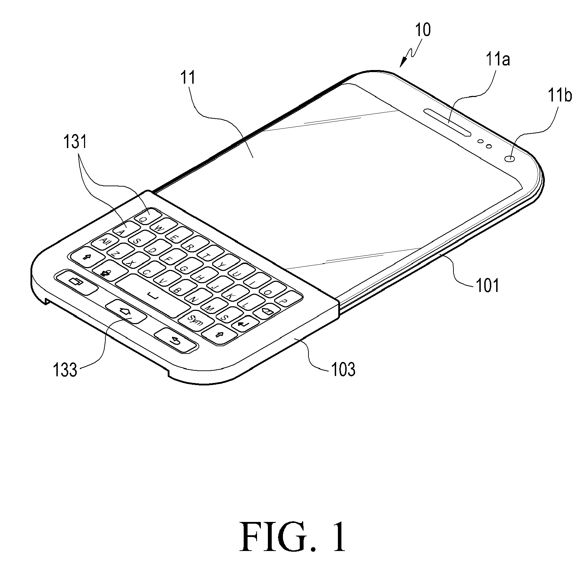

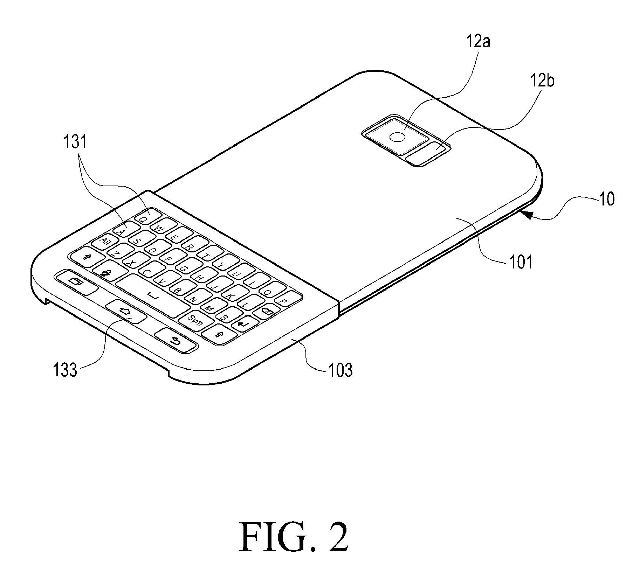

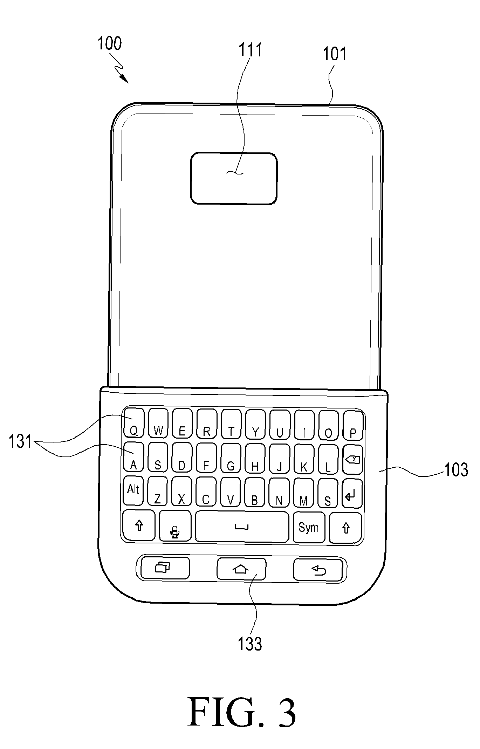

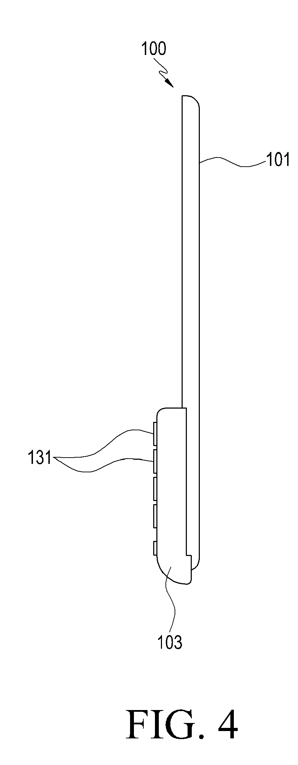

FIG. 1 is a front perspective view of an electronic device equipped with a cover according to various embodiments of the present disclosure, FIG. 2 is a rear perspective view of an electronic device equipped with a cover according to various embodiments of the present disclosure, FIG. 3 is a front view of a cover according to various embodiments of the present disclosure, and FIG. 4 is a side view of a cover according to various embodiments of the present disclosure.

Referring to FIGS. 1 and 2, an electronic device 10 may include a main body and a touch screen 11 provided on the front surface of the main body. The touch screen 11 may provide the function of an output device that outputs various types of content, such as photos, videos, etc., through a screen. The exterior of the touch screen 11 may be formed of a transparent window member and may partially have a curved surface. However, the exterior of the touch screen 11, without being limited thereto, may also have a flat surface. Furthermore, according to various embodiments, the touch screen 11, into which a touch panel is integrated, may provide the function of an input device.

In addition, a speaker 11a for outputting a sound and a first camera 11b for taking a photograph in the front direction may be provided on a front side of the touch screen 11 of the electronic device 10. A second camera 12a for taking a photograph in the rear direction and a flash 12b for outputting light in order for the second camera 12a to take a photograph may be provided on a rear surface 12 of the electronic device 10.

Referring to FIGS. 1 to 4, a cover 100, according to one of the various embodiments of the present disclosure, may include a rear cover 101 and a cover 103 that includes a plurality of keys.

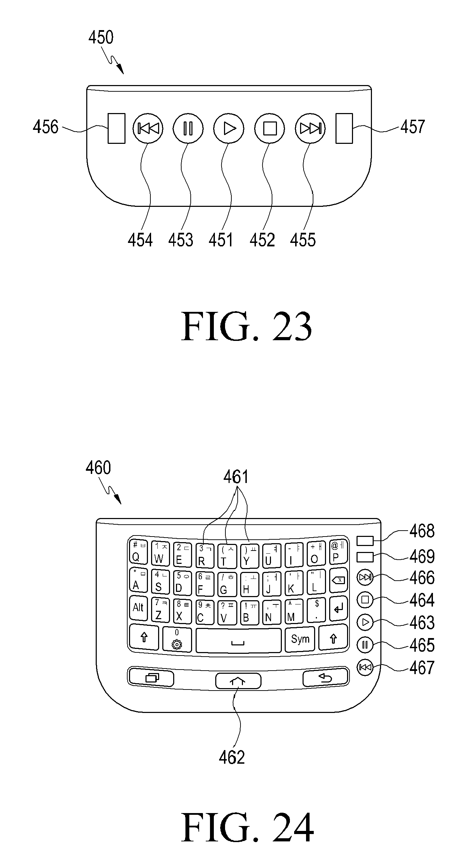

The cover 103, which includes the plurality of keys, may be, for example, a keypad cover, and may also be a music cover, a circular control cover, etc.. The music cover or the circular control cover will be described below with reference to FIGS. 23 to 25. The rear cover 101 may be mounted on the rear surface of the electronic device 10 to protect the rear surface thereof from an external shock. The rear cover 101 may be formed of a synthetic resin such as, for example, polyurethane, polycarbonate, etc. However, the rear cover 101 may be formed of various materials capable of protecting the electronic device 10. The side of the rear cover 101 may be formed to partially cover the side of the electronic device 10 so that the rear cover 101 may be detachably coupled to the electronic device 10. Further, the rear cover 101 may have an opening 111 formed therein for exposing the second camera 12a and the flash 12b.

The keypad cover 103 may include one or more switch members 131 that operate mechanically, and may generate input signals when a user pushes the switch members 131 (e.g., performs a key input operation). The switch members 131 may perform a function of entering English letters. However, the switch members 131, without being limited thereto, may perform a function of entering numbers, special characters, and various languages, such as the Hangul, etc. The keypad cover 103 may be formed of polycarbonate. Further, the switch members 131 may be formed of a synthetic resin such as, for example, polyurethane, polycarbonate, etc. The keypad cover 103 may be mounted on the front surface of the electronic device 10, for example, on the lower portion of the front surface of the electronic device 10 to enable a user to perform a key input operation while simultaneously viewing the touch screen 11. In addition, the keypad cover 103 may be mounted to partially cover the rear cover 101 so that the user may use the entire touch screen 11. As described above, when the keypad cover 103 is mounted on the front surface of the electronic device 10, the user can more accurately and rapidly enter information using the keypad cover 103, and when the keypad cover 103 is mounted on the rear surface, the user can perceive the entire touch screen 11. Further, the switch members 131 may be planar with the front surface of the keypad cover 103, but, without being limited thereto, may be formed to further protrude from the front surface of the keypad cover 103. The keypad cover 103 may protect a part of the front surface of the electronic device 10 from an external shock.

The keypad cover 103 may have a keypad home key 133 that covers a home key of the electronic device 10. The keypad home key 133 may press the home key of the electronic device 10 when being pushed.

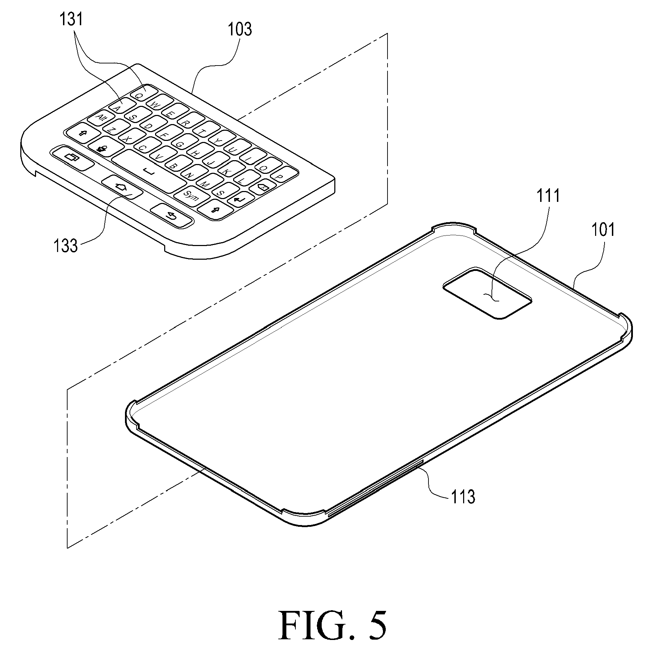

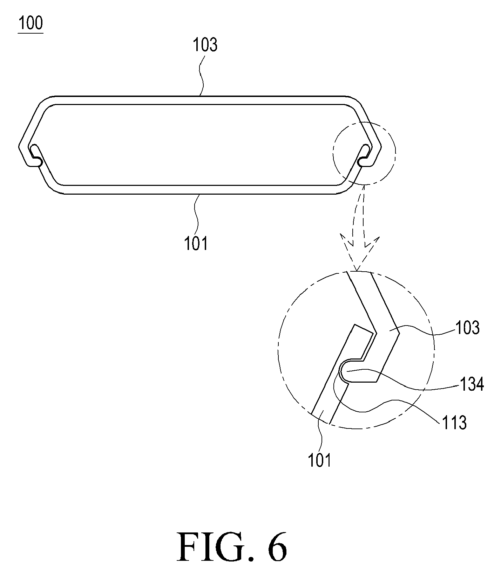

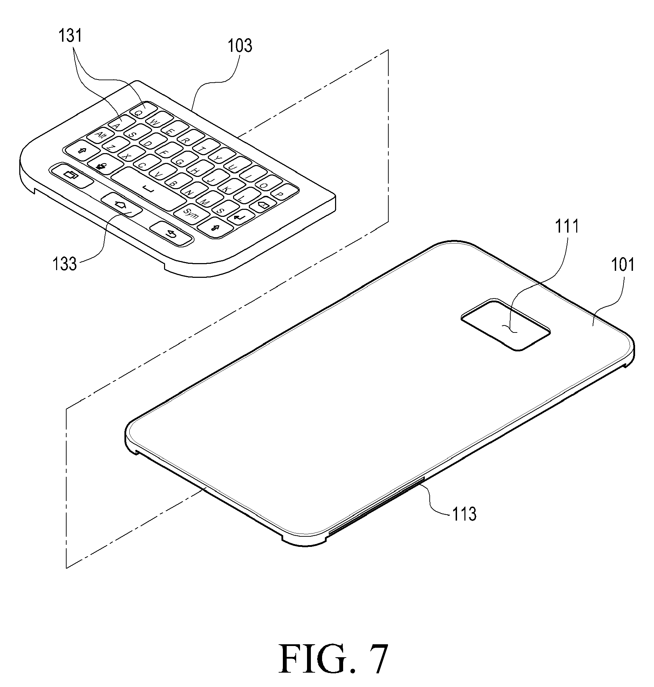

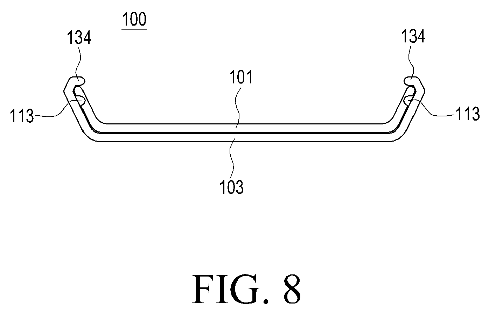

FIG. 5 is an exploded perspective view of a cover according to various embodiments of the present disclosure, FIG. 6 is a cross-sectional view illustrating a cover having the keypad cover of FIG. 5 coupled to a rear cover according to various embodiments of the present disclosure, FIG. 7 is an exploded perspective view of a keypad according to various embodiments of the present disclosure, and FIG. 8 is a cross-sectional view illustrating a cover having the keypad cover of FIG. 7 coupled to a rear cover according to various embodiments of the present disclosure.

Referring to FIGS. 5 to 6, a cover 100 is illustrated having a keypad cover 103 that can be detachably coupled to a rear cover 101. The cover 100 may include coupling grooves 113 formed on sides of the rear cover 101, respectively. The coupling grooves 113 may be formed along the longitudinal direction of the lateral sides of the rear cover 101. The lateral sides of the keypad cover 103 may be formed to surround the lateral sides of the rear cover 101. The lateral ends 134 of the keypad cover 103 may extend from the lateral sides of the keypad cover 103 and may have a shape corresponding to the coupling grooves 113. Further, the lateral ends 134 of the keypad cover 103 may be formed along the longitudinal direction of the lateral sides of the rear cover 101 and may be coupled to the coupling grooves 113. The lateral ends 134 of the keypad cover 103 may be engaged with the coupling grooves so that the keypad cover 103 may be mounted to face the front surface of the rear cover 101. When the keypad cover 103 and the rear cover 101 are coupled to each other, a user may enter information through the switch members 131 of the keypad cover 103 while viewing the touch screen 11. In contrast, the keypad cover 103 may slide along the coupling grooves 113 so as to be separated from the rear cover 101.

Referring to FIGS. 7 to 8, the lateral sides of the keypad cover 103 may be formed to surround the lateral sides of the rear cover 101. When the keypad cover 103 surrounds the rear surface of the rear cover 101, the lateral ends 134 of the keypad cover 103 may be coupled to the lateral ends of the rear cover 101. The lateral ends 134 of the keypad cover 103 may slide along the lateral sides of the rear cover 101 so that the keypad cover 103 may be coupled to the rear surface of the rear cover 101. Since the keypad cover 103 is coupled to the rear surface of the rear cover 101, a user can carry the keypad cover 103 together with the electronic device 10 without having to separately carry the keypad cover 103.

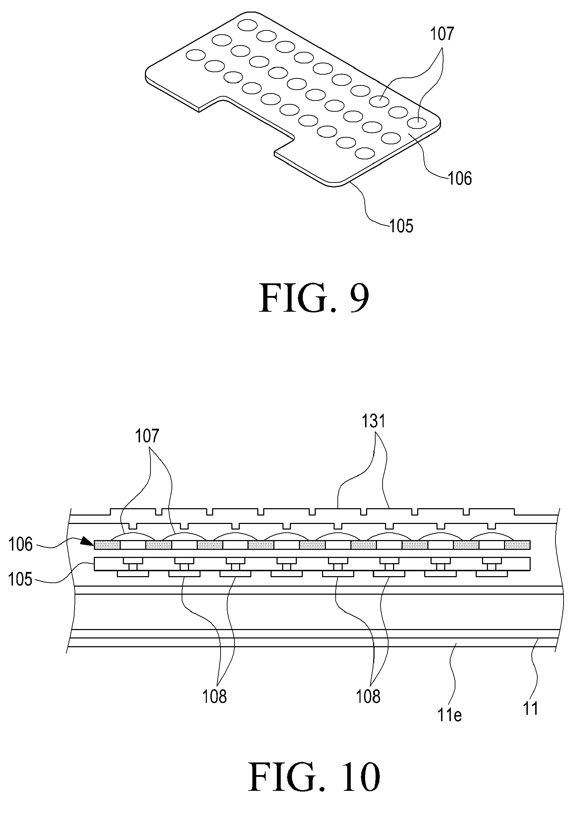

FIG. 9 is a perspective view illustrating a part of a keypad cover according to various embodiments of the present disclosure, and FIG. 10 is a cross-sectional view illustrating a part of the keypad cover of the cover according to various embodiments of the present disclosure.

Referring to FIGS. 9 and 10, the keypad cover 103 may include a circuit board 105, a conductive layer 106, a plurality of dome switches 107, and conductive pads 108. The circuit board 105 may be provided in the interior of the keypad cover 103 and may have via holes formed through the top and bottom thereof. The via holes may be filled with a conductive material, and the top and bottom of the circuit board 105, for example, the conductive pads 108 may be electrically connected to the conductive layer 106 through the via holes and the dome switches 107.

The conductive layer 106 may be formed on one surface of the circuit board 105, for example, on the top surface. The conductive layer 106 may be formed by depositing, or plating, a conductive material onto the circuit board 105 and then partially removing (e.g., wet-etching or dry-etching) the conductive material according to a designed pattern.

The dome switches 107 may be arranged on the conductive layer 106 to correspond to the switch members 131, respectively, and may cover the upper sides of the respective via holes. When a user presses the switch members 131, the dome switches 107 corresponding to the pressed switch members may connect the corresponding conductive pads 108 to the conductive layer.

The conductive pads 108 may be arranged on the bottom of the circuit board 105 to correspond to the respective dome switches 107 and may be electrically connected to the plurality of dome switches 107 when the plurality of dome switches 107 are pressed. For example, the conductive pad 108 that corresponds to one of the dome switches 107 is operated by the press of the switch members 131 and may be electrically connected to the conductive layer 106 via the corresponding via hole and the corresponding dome switch 107. An electromagnetic property, for example the capacitance, of the conductive pad 108 may vary according to whether the conductive pad 108 is electrically connected to the conductive layer 106. For example, the conductive pad 108 may be adjacent to, or make contact with, the touch screen 11, and the touch screen 11 may include a touch panel 11e may recognize the change of the electromagnetic property of the conductive pad 108 as an input signal. Further, according to various embodiments, virtual keys that correspond to the switch members 131 of the keypad cover may be implemented on a portion of the touch screen 11 that is hidden by the keypad cover 103. The conductive pads 108 may be disposed above the virtual keys so that the virtual keys may receive input signals according to the electrical change of the conductive pads 108. Functions corresponding to the characters, numbers, etc. that are printed on the switch members 131 of the keypad cover 103 may be allocated to the virtual keys that are implemented on the portion hidden by the keypad cover 103.

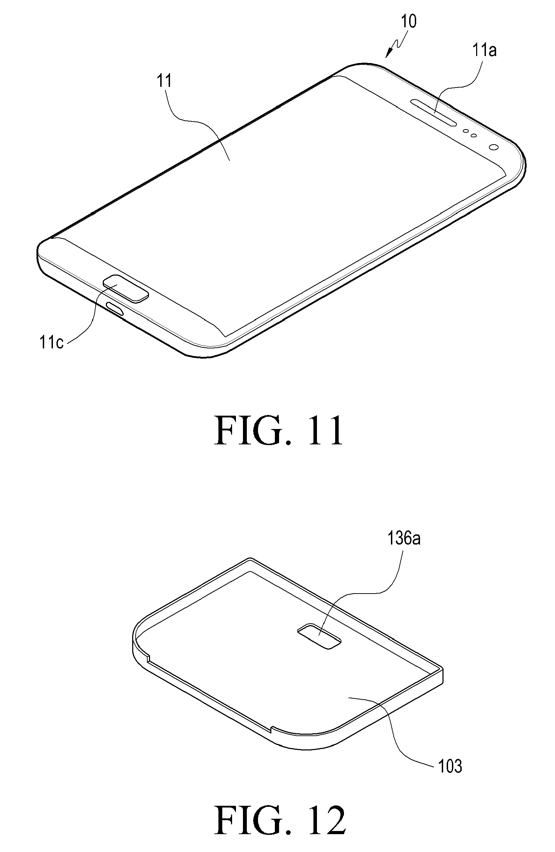

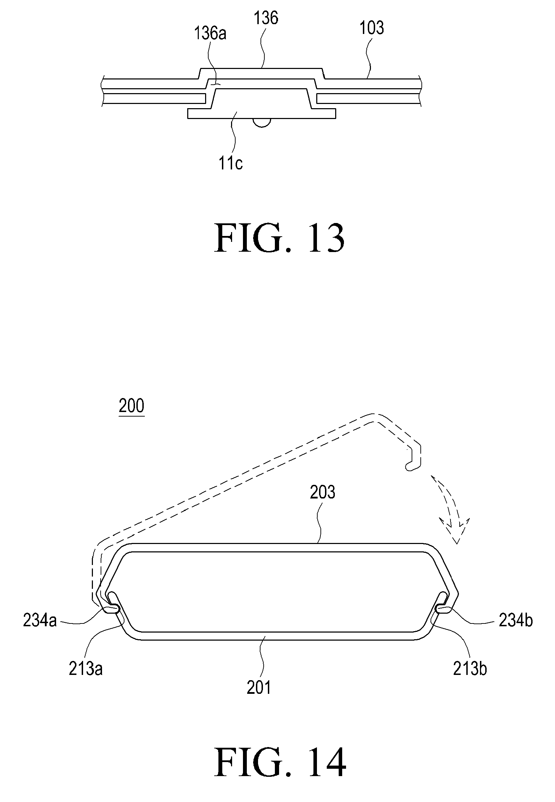

FIG. 11 is a perspective view of an electronic device according to various embodiments of the present disclosure, FIG. 12 is a rear perspective view of a keypad cover according to various embodiments of the present disclosure, and FIG. 13 is a cross-sectional view illustrating a first home key of an electronic device and a second home key of a cover according to various embodiments of the present disclosure.

Referring to FIGS. 11 to 13, the electronic device 10 may include the first home key 11c that is disposed on one side, for example the lower side, of the touch screen 11. The first home key 11c may be formed to further protrude beyond the touch screen 11.

A recess 136a corresponding to the first home key may be formed in the rear surface (e.g., the inner surface) of the keypad cover 103, and the second home key 136 corresponding to the recess in which the first home key 11c is accommodated may be provided on the front surface of the keypad cover 103. The second home key 136 may press the first home key 11c while being pushed by an external press (e.g., a user's press). Further, the recess 136a may prevent interference caused by the first home key 11c in a state in which the keypad cover 103 is mounted on the front surface of the electronic device 10. The second home key 136 may have a shape corresponding to the first home key 11c and may cover the first home key 11c. The first home key 11c may be pressed by the push of the second home key 136 to generate an input signal.

FIG. 14 is a cross-sectional view of a cover according to various embodiments of the present disclosure.

Referring to FIG. 14, a cover 200 may include a rear cover 201 and a keypad cover 203. Descriptions of elements similar to those of the preceding embodiment will be omitted in this embodiment.

The rear cover 201 may have coupling grooves 213a and 213b formed on the lateral sides thereof, and the coupling grooves 213a and 213b may have a curved surface.

The lateral ends 234a and 234b of the keypad cover 203 may correspond to the coupling grooves 213a and 213b and may be inserted into the coupling grooves 213a and 213b, respectively. The lateral ends 234a and 234b of the keypad cover 203 may have a curved surface so that the lateral ends 234a and 234b of the keypad cover 203 may rotate within the coupling grooves 213a and 213b.

A process of coupling the keypad cover 203 to the rear cover 201 will be described. First, one lateral end 234a may be inserted into the coupling groove 213a of the rear cover 201. Then, the keypad cover 203 may rotate about the coupling groove 213a on one side of the rear cover 201, and the other lateral end 234b of the keypad cover 203 may be inserted into, and coupled to, the coupling groove 213b on the other side of the rear cover 201. The cover 200 may prevent the first home key 11c from interfering with the keypad cover 203 while coupling the keypad cover 203 to the rear cover 201.

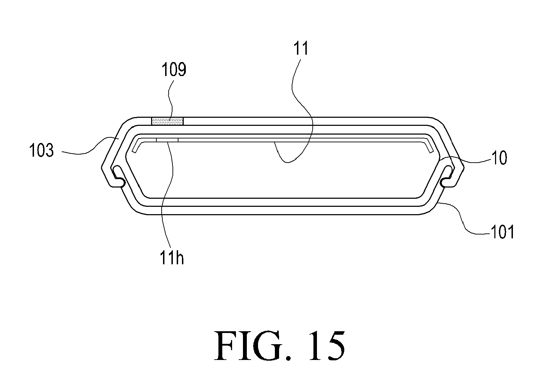

FIG. 15 is a cross-sectional view illustrating an electronic device and a cover according to various embodiments of the present disclosure.

Referring to FIG. 15, the electronic device may include a Hall sensor 11h disposed on a side of the touch screen 11. The Hall sensor 11h may detect a magnetic field therearound. Further, a magnetic body 109 may be disposed in the keypad cover 103 to correspond to the Hall sensor 11h.

When the Hall sensor 11h detects the magnetic field induced by the magnetic body 109, the Hall sensor 11h may detect that the keypad cover 103 has been mounted to face the touch screen 11.

Further, the electronic device may perform a near field communication (NFC) function, and the keypad cover 103 may include an integrated circuit (IC) card that responds to the NFC. According to the response of the IC card, the NFC may detect whether the keypad cover 103 has been mounted to surround the rear surface of the rear cover 101.

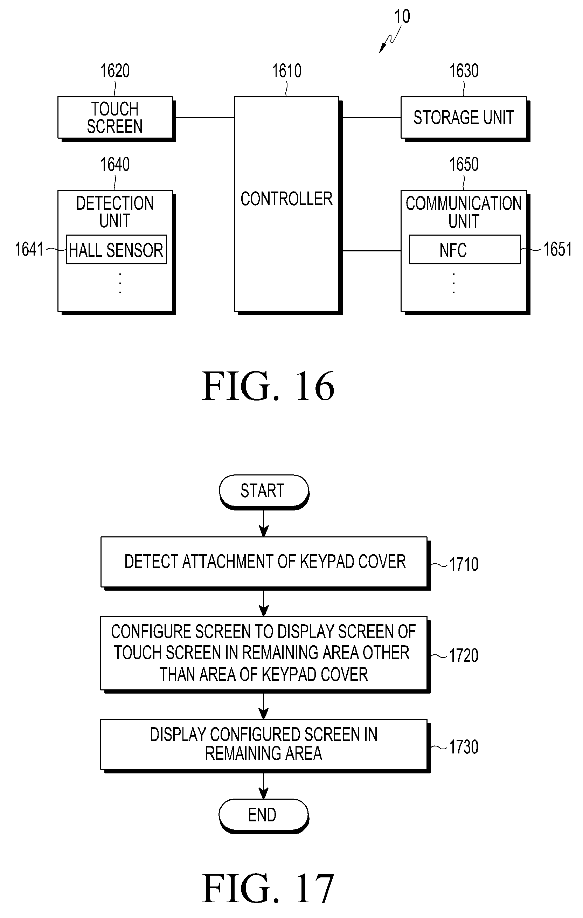

FIG. 16 is a block diagram of an electronic device that controls a touch screen according to various embodiments of the present disclosure.

Referring to FIG. 16, an electronic device 10 that controls the screen of a touch screen may include a touch screen 1620, a storage unit 1630, a detection unit 1640, a communication unit 1650, and a controller 1610.

The touch screen 1620 may be implemented by a liquid crystal display (LCD), a light-emitting diode (LED) display, an organic light-emitting diode (OLED) display, a microelectromechanical systems (MEMS) display, and an electronic paper display. The touch screen 1620 may display, for example, various types of content (e.g., text, images, videos, icons, symbols, etc.) to a user. The touch screen 1620 may receive, for example, a touch input, a gesture input, a proximity input, or a hovering input using an electronic pen or a part of a user's body.

The storage unit 1630 may include a volatile memory and/or a non-volatile memory. The storage unit 1630 may store, for example, instructions or data relating to at least one other element of the electronic device 10. According to an embodiment, the storage unit 1630 may store software and/or programs required for operating the electronic device 10. The storage unit 1630 may store an identifier for identifying a keypad cover that may be attached to, and detached from, the electronic device 10. The identifier may include a unique number for determining whether the keypad cover attached to the electronic device 10 is a unique keypad cover of the electronic device 10.

The detection unit 1640 may include at least one sensor that detects at least one of the state of the electronic device 10 such as, for example, the mounting of an external device, and the attaching/detaching of the keypad cover, etc. In addition, the detection unit 1640 may include at least one sensor that detects the attaching/detaching of a music control cover (e.g., a cover that includes command related to playback of music such as play, pause, and stop icons). For example, the detection unit 1640 may include a Hall sensor 1641 that can detect the attaching/detaching of the keypad cover. Further, the detection unit 1640 may include: a proximity sensor for detecting a user's proximity to the electronic device 10; an illumination sensor (not illustrated) for detecting an amount of light around the electronic device 10; a motion sensor (not illustrated) for detecting the motion of the electronic device 10 (e.g., the rotation of the electronic device 10 and acceleration or vibration applied to the electronic device 10); a geo-magnetic sensor (not illustrated) for detecting a point of the compass using the Earth's magnetic field; a gravity sensor for detecting a direction in which the Gravity is applied; and an altimeter for detecting an altitude by measuring an atmospheric pressure. Moreover, the detection unit 1640 may detect the location of a user's eyes, or the location and movement of a hand or an electronic pen (not illustrated). At least one sensor may detect the state and may generate a signal corresponding to the detection to transmit the generated signal to the controller 1610. The various sensors of the detection unit 1640 may be added or omitted according to the configuration of the electronic device 10.

The communication unit 1650 may include, for example, an NFC module 1651 that provides communication between the electronic device 10 and the keypad cover 103. Further, the communication unit 1650 may provide, for example, short-range communication between the electronic device 10 and the keypad cover 103. In addition, the communication unit 1650 may be connected to a network through wireless or wired communication to communicate with the external device. The communication unit 1650 may include a module for providing at least one of long term evolution (LTE), LTE-advance (LTE-A), code division multiple access (CDMA), wideband CDMA (WCDMA), universal mobile telecommunications system (UMTS), wireless broadband (WiBro), global system for mobile communications (GSM), etc. Moreover, the communication unit 1650 may include at least one of WiFi, Bluetooth, NFC, and global navigation satellite system (GNSS), etc.

The controller 1610 may include one or more of a central processing unit (CPU), an application processor (AP), and a communication processor (CP). For example, the controller 1610 may carry out operations or data processing relating to the control and/or communication of at least one other element of the electronic device 10.

The controller 1610 may detect the attachment of the keypad cover and display a screen in the remaining area other than the area of the keypad cover. When the keypad cover is attached, the controller 1610 may communicate with the attached keypad cover using the NFC and may determine whether the attached keypad cover is a unique keypad cover for the electronic device. The keypad cover may have an integral IC card that includes the unique identifier thereof. The controller 1610 may communicate with the IC card, which is embedded in the keypad cover, by using the NFC and may determine whether the attached keypad cover is a keypad cover unique thereto. Using at least one of the Hall sensor and the NFC, the controller 1610 may determine whether the keypad cover is attached to the front or rear surface of the electronic device. Using the Hall sensor 1641, the controller 1610 may determine whether the keypad cover is mounted on the electronic device. Further, through another sensor in conjunction with the Hall sensor 1641, the controller 1610 may determine whether the keypad cover is mounted on the front surface of the electronic device. When the keypad cover is attached to the front surface of the electronic device 10, the controller 1610 may configure a screen suitable for the remaining area by adjusting at least one of the size and layout of the displayed screen. The controller 1610 may configure a screen suitable for the remaining area by adjusting at least one of the sizes and layouts of images, icons, etc. that are included in the displayed screen. The controller 1610 may read information on the horizontal and vertical lengths of the keypad from the storage unit 1630 and may use the information to configure a screen. The controller 1610 may determine the horizontal and vertical lengths of the touch screen 1620 and the horizontal and vertical lengths of the keypad cover and may determine the horizontal and vertical lengths of the touch screen for displaying the configured screen. The controller 1610 may display the screen on the touch screen according to the determined horizontal and vertical lengths of the touch screen. The controller 1610 may configure a screen by adjusting at least one of the size and layout according to the type of screen. The type may include at least one of an application, an icon, and an image. For example, if the keypad cover includes a physical button, and a message application is being executed, the controller 1610 may detect, through the control of the touch screen, a text input that is entered through the keypad cover. For example, if the mounting of the keypad is detected while an application is being executed, the controller 1610 may display the running application in the remaining area except the detected keypad.

FIG. 17 is a flowchart of a process for controlling a touch screen of an electronic device according to various embodiments of the present disclosure.

Referring to FIG. 17, the electronic device 10 may detect the attachment of the keypad cover at operation 1710. Using at least one of the Hall sensor and the NFC, the electronic device 10 may detect whether the keypad cover has been attached to the front or rear surface of the electronic device. For example, using at least one of Bluetooth low energy (BLE) and a BLE Tag, the electronic device 10 may detect whether the keypad cover has been attached to the front or rear surface of the electronic device.

When it is detected that the keypad cover has been attached, the controller 1610 may determine whether the attached keypad cover has been attached to the rear surface of the electronic device using NFC. The keypad cover may have an integral IC card that includes the unique identifier thereof. The controller 1610 may communicate with the IC card, which is embedded in the keypad cover, by using NFC and may determine whether the attached keypad cover is a keypad cover unique thereto, or whether the attached keypad cover has been attached to the rear surface of the electronic device. Using at least one of the Hall sensor and NFC, the controller 1610 may determine whether the keypad cover has been attached to the front or rear surface of the electronic device. Using the Hall sensor 1641, the controller 1610 may determine whether the keypad cover has been mounted on the electronic device. Further, using the Hall sensor 1641, the controller 1610 may determine whether the keypad cover has been mounted on the front surface of the electronic device.

The electronic device 10 may configure a screen to display the screen in the remaining area other than the area covered by the keypad cover at operation 1720. When the keypad cover is attached to the front surface of the electronic device 10, the electronic device 10 may configure a screen suitable for the remaining area by adjusting at least one of the size and layout of the displayed screen. The electronic device 10 may configure a screen by adjusting at least one of the size and layout according to the type of screen displayed on the touch screen. The type may include at least one of an application, an icon, and an image.

The electronic device 10 may display the configured screen in the remaining area at operation 1730. The electronic device 10 may control the touch screen 1620 to display the configured screen in the remaining area of the touch screen 1620. The electronic device 10 may control the touch screen to display the configured screen in the remaining area of the touch screen according to a tilt of the electronic device to the left or right.

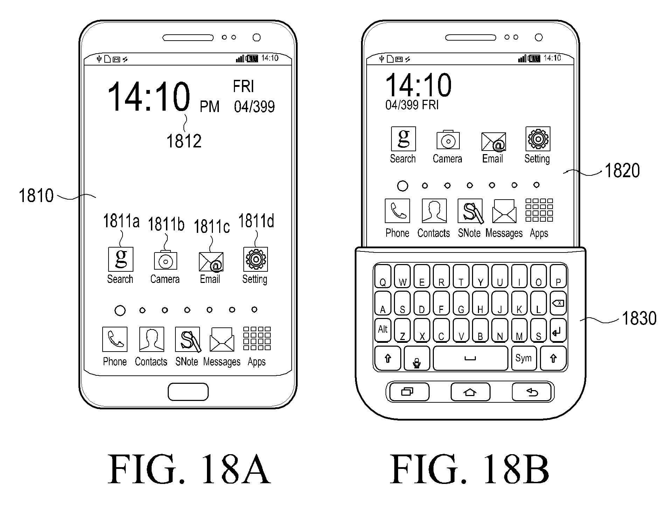

FIG. 18A illustrates a main screen on a touch screen according to an embodiment of the present disclosure, and FIG. 18B illustrates a screen that is displayed when a keypad cover is mounted on a front surface of an electronic device according to an embodiment of the present disclosure.

Referring to FIGS. 18A and 18B, the electronic device may display a screen 1810 on the touch screen. The screen may be the wallpaper of the electronic device, and a plurality of icons 1811a to 1811d and a clock 1812 may be displayed on the screen. When the keypad cover 1830 is mounted on the front surface of the electronic device, the electronic device may detect the mounting of the keypad cover and may configure a screen such that the screen 1810 may be displayed in response to the mounting of the keypad cover. The electronic device may configure the screen 1810 such that the screen is not hidden by the keypad cover 1830, and may display the configured screen 1820 on the touch screen. When configuring the screen, the electronic device may remove or reduce icons, information, and the like that do not need to be displayed. In addition, the electronic device may adjust the layout of the screen. Further, the electronic device may detect an input generated by at least one key of the keypad cover and may execute the corresponding function in response. Moreover, the electronic device may also change the adjusted layout.

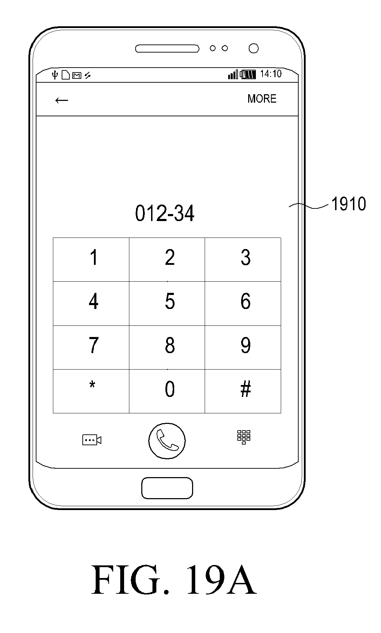

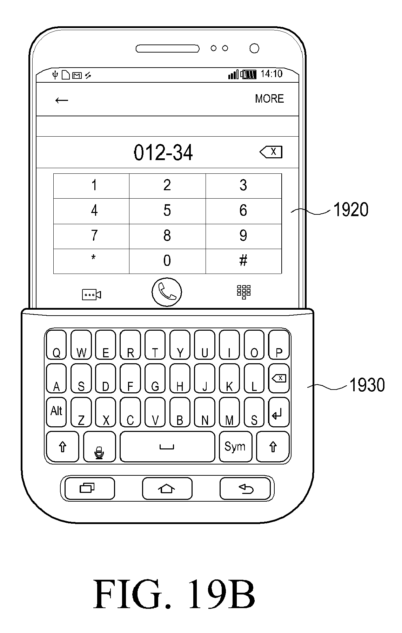

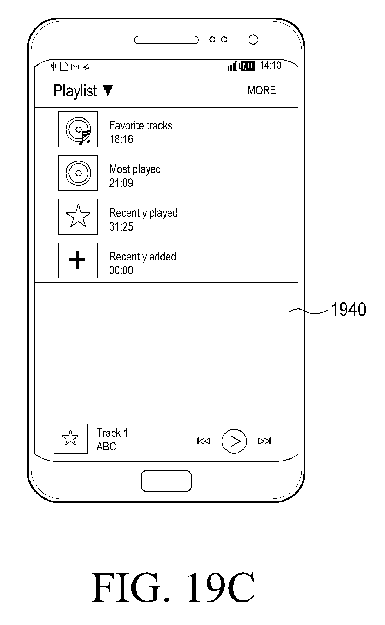

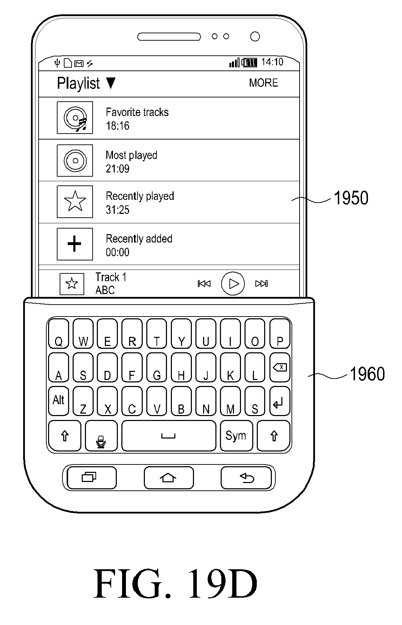

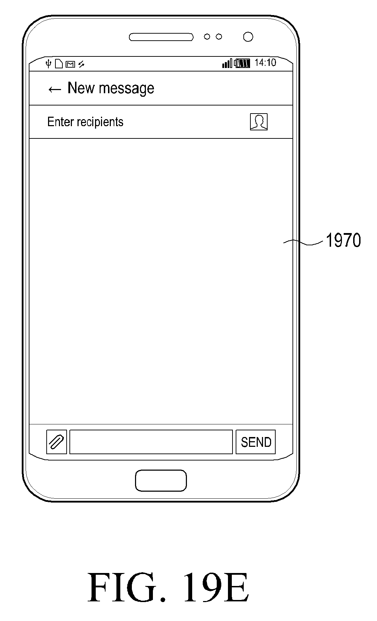

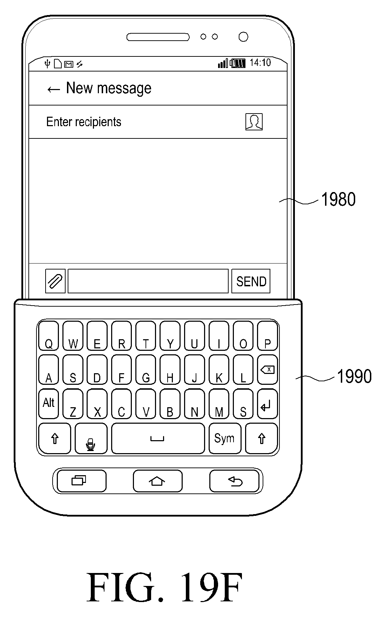

FIG. 19A illustrates a screen displaying a keypad for a telephone call according to an embodiment of the present disclosure, FIG. 19B illustrates a screen that is configured to correspond to a keypad cover mounted on the front surface of an electronic device while the keypad is displayed according to an embodiment of the present disclosure, FIG. 19C illustrates an example screen for a media player on the touch screen, according to an embodiment of the present disclosure, FIG. 19D illustrates an example screen that is configured to correspond to a keypad cover mounted on the front surface of the electronic device while the screen for the media player is displayed according to an embodiment of the present disclosure, FIG. 19E illustrates an example of displaying a screen for creating a message on the touch screen, according to an embodiment of the present disclosure, and FIG. 19F illustrates an example screen that is configured to correspond to a keypad cover mounted on the front surface of the electronic device while the screen for creating a message is displayed according to an embodiment of the present disclosure.

Referring to FIGS. 19A and 19B, when a user wants to make a call, the electronic device may display a screen 1910 to receive the phone number for the call. The screen may be a screen on which a plurality of numbers are displayed in order to receive a phone number, or a screen through which countries' languages are input. When the keypad cover 1930 is mounted on the front surface of the electronic device while the screen 1910 is displayed, the electronic device may detect the mounting of the keypad cover and may configure a screen such that the screen 1910 may be displayed anew in response to the mounting of the keypad cover. The electronic device may configure the screen 1910 as a screen 1920 such that the screen is displayed in the area that is not hidden by the keypad cover 1930 and may display the configured screen 1920 on the touch screen. When configuring the screen, the electronic device may remove or reduce icons, information, and the like that do not need to be displayed. In addition, the electronic device may adjust the layout to configure the screen. Further, the electronic device may detect an input generated by at least one key of the keypad cover and may execute the corresponding function in response to the detection.

Referring to FIGS. 19C and 19D, when a user wants to reproduce multimedia, such as music or a video, the electronic device may display, on a screen 1940 of the touch screen, the multimedia to be reproduced. The screen may display various types of information, such as the type of multimedia preferred by a user, the type of most frequently reproduced multimedia, the type of recently reproduced multimedia, etc. In cases where the keypad cover 1960 is mounted on the front surface of the electronic device while the screen 1940 is displayed, the electronic device may detect the mounting of the keypad cover and may configure a screen such that the screen 1940 may be displayed anew in response to the mounting of the keypad cover. The electronic device may configure the screen 1940 as a screen 1950 such that the screen is displayed in the area that is not hidden by the keypad cover 1960 and may display the configured screen 1950. When configuring the screen, the electronic device may remove or reduce icons, information, and the like that do not need to be displayed. In addition, the electronic device may adjust the layout to configure the screen. Further, the electronic device may detect an input generated by at least one key of the keypad cover and may execute the corresponding function in response to the detection.

Referring to FIGS. 19E and 19F, when a user wants to create a message, the electronic device may display an application for creating a message on a screen 1970 of the touch screen. The screen may display the trace of a character or number in response to the detection of a touch or hovering input. When the keypad cover 1990 is mounted on the front surface of the electronic device while the screen 1970 is displayed, the electronic device may detect the mounting of the keypad cover and may configure a screen such that the screen 1970 may be displayed anew in response to the mounting of the keypad cover. The electronic device may configure the screen 1970 as a screen 1980 such that the screen is displayed in the area that is not hidden by the keypad cover 1990 and may display the configured screen 1980 on the touch screen. When configuring the screen, the electronic device may remove or reduce icons, information, and the like that do not need to be provided to a user. In addition, the electronic device may adjust the layout. Further, the electronic device may detect an input generated by at least one key of the keypad cover and may execute the corresponding function in response to the detection.

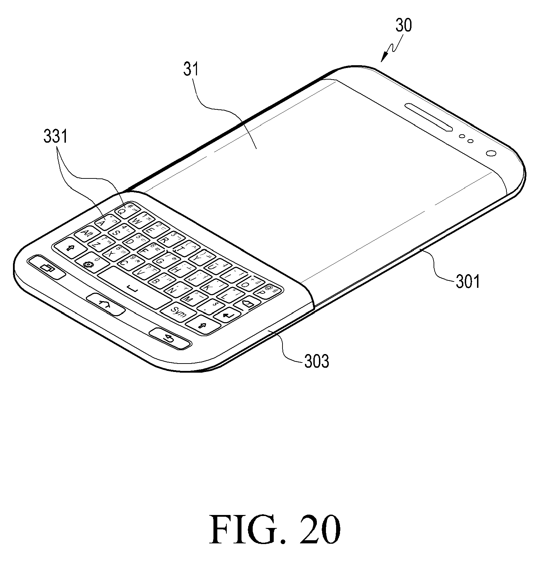

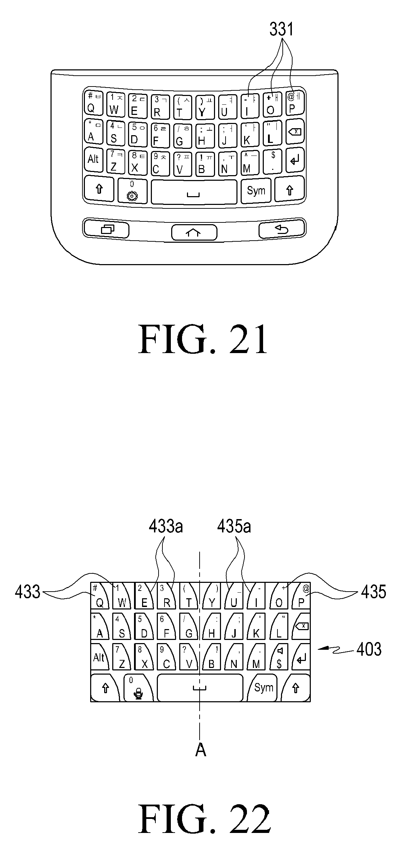

FIG. 20 is a front perspective view of an electronic device equipped with a cover according to various embodiments of the present disclosure and FIG. 21 is a front view of the keypad cover illustrated in FIG. 20 according to various embodiments of the present disclosure.

Referring to FIGS. 20 and 21, an electronic device 30 may include a touch screen 31 that is at least partially formed of a curved surface, and the cover equipped to the electronic device 30 may include a rear cover 301 and a keypad cover 303. Descriptions of elements similar to those of the preceding embodiment will be omitted in this embodiment.

At least a part of the lateral sides of the touch screen 31, for example, a part of the edge thereof, may be formed of a curved surface so that the touch screen 31 may output a photo, an icon, etc., or may provide a touch input function, through the lateral sides thereof.

The lateral sides of the keypad cover 303 may have a curved surface that corresponds to the lateral sides of the touch screen 31. Switch members 331 of the keypad cover 303 may be arranged along a curvilinear path. The switch members 331 may be arranged along the curvilinear path to provide the design of the keypad cover 303 that conforms to user demand. The switch members 331 may input English letters, numbers, special characters, or Hangul characters.

FIG. 22 is a front view of a keypad cover according to various embodiments of the present disclosure.

Referring to FIG. 22, a keypad cover 403 of the cover, according to the various embodiments of the present disclosure, may include switch members 433 and 435, at least one side of which has a curvilinear shape. Further, at least a part of the lateral sides of the keypad cover 403, for example a part of the edge thereof, may be formed of a curved surface.

The switch members 433 are provided on one side of a virtual line A that passes through the center of the keypad cover 403 and the switch members 435 are provided on the opposite side of the virtual line A. Sides 433a and 435a of the switch members 433 and 435, which are oriented toward the virtual line A, may have a curvilinear shape so that the sides 433a of the first switch members 433 and the sides 435a of the second switch members 435 may be symmetric to each other. The first switch members 433 may be pressed by the fingers of a user's left hand, and the second switch members 435 may be pressed by the fingers of the user's right hand. When the user presses the switch members 433 and 435, the sides 433a and 435a thereof that have a curvilinear shape may guide the user's manipulation. For example, when the user presses one of the first switch members 433 with a finger of his/her left hand, the user's finger may be guided by the curvilinear side 433a of the first switch member so that it is possible to prevent the first switch member from being pressed together with another of the first switch members 433.

FIG. 23 is a front view of a cover that includes a plurality of keys according to various embodiments of the present disclosure.

Referring to FIG. 23, a music cover 450 includes the plurality of keys corresponding to music playback functions.

The music cover 450 may be mounted on the front surface of the electronic device 10 and may be detachably coupled to the rear cover 101. The music cover 450 may have music function keys mounted thereon. The music function keys may include a play key 451, a stop key 452, a pause key 453, a back key 454, a forward key 455, a volume-up key 456, and a volume-down key 457. However, the music function keys, without being limited thereto, may include various keys, such as a skip key, etc. Further, the music function keys is not limited to a mechanical button that provides a click feeling, and may also transmit an input signal to the electronic device by inducing a change in the capacitance of the touch screen.

When the music cover 450 is mounted on the front surface of the electronic device 10, a user may operate a music application of the electronic device 10 using the music function keys.

FIG. 24 is a front view of a cover that includes a plurality of keys according to various embodiments of the present disclosure.

Referring to FIG. 24, a cover 460 that includes the plurality of keys, according to the various embodiments of the present disclosure, may be a cover into which a keypad cover and a music cover are integrated.

The cover 460 that includes the plurality of keys may have input keys 461 for inputting characters, numbers, etc., a home key 462, and music function keys that are mounted thereon. The music function keys, similar to those in the preceding embodiment, may include a play key 463, a stop key 464, a pause key 465, a back key 467, a forward key 466, a volume-up key 468, and a volume-down key 469. The music function keys 463 to 469 may be arranged on one side of the input keys 461 with respect to the front surface of the cover 460 that includes the plurality of keys.

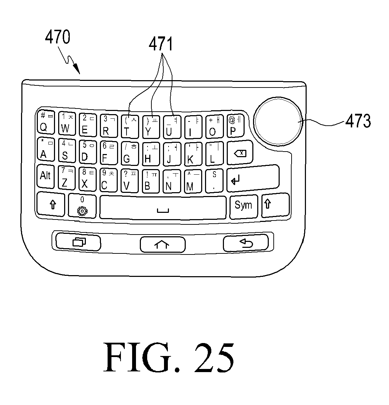

FIG. 25 is a front view of a cover that includes a plurality of keys according to various embodiments of the present disclosure.

Referring to FIG. 25, a cover 470 that includes the plurality of keys, according to the various embodiments of the present disclosure, may include input keys 471 for inputting characters, numbers, etc. and a circular controller 473.

The circular controller 473 may be divided into a plurality of areas. The divided areas may perform the functions of a play key, a stop key, a pause key, a back key, and a forward key. For example, a user may operate a music application of the electronic device by touching different areas of the circular controller 473. Further, the circular key 473 may rotate in the clockwise or counterclockwise direction to perform the function of a volume-up or volume-down key.

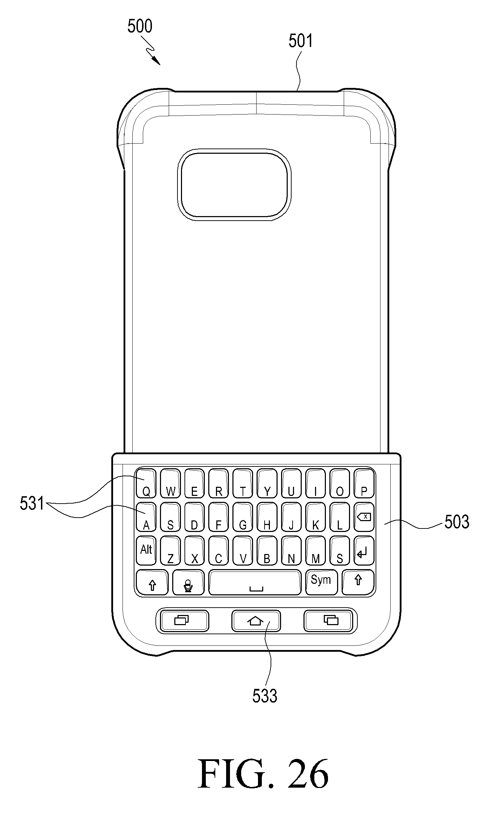

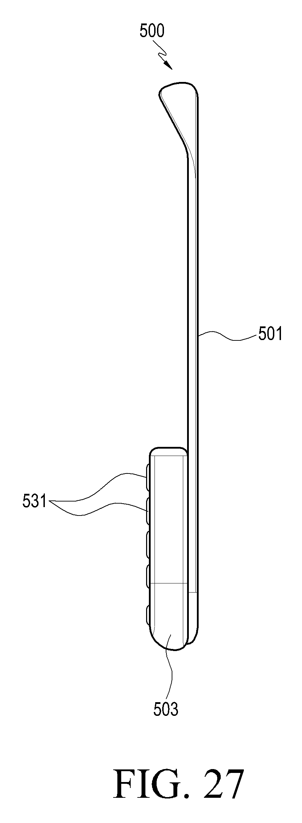

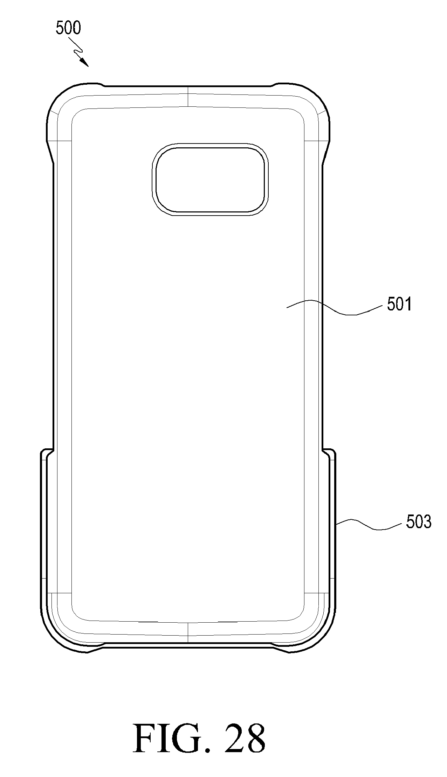

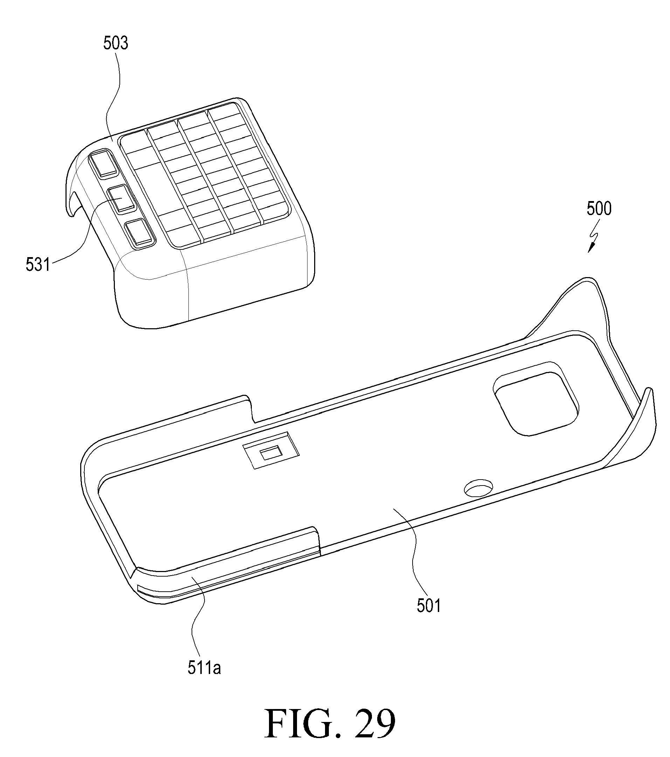

FIG. 26 is a front view of a cover according to various embodiments of the present disclosure, FIG. 27 is a side view of the cover of FIG. 26 according to the embodiment of the present disclosure, FIG. 28 is a rear view of the cover of FIG. 26 according to the embodiment of the present disclosure, and FIG. 29 is an exploded perspective view of the cover of FIG. 26 according to the embodiment of the present disclosure.

Referring to FIGS. 26 to 29, a cover 500 may include a first cover member 501 and a second cover member 503. In the description of this embodiment, elements identical or similar to those of the preceding element will not be described. Further, the electronic device described in this embodiment is identical or similar to that described in the preceding embodiment, and therefore the description thereof will be omitted.

The first cover member 501 may be mounted on the rear surface of the electronic device to protect the rear surface thereof from an external shock. The first cover member 501 maybe formed of a synthetic resin, for example, polyurethane, polycarbonate, etc. However, the first cover member 501, without being limited thereto, maybe formed of various materials capable of protecting the electronic device. The lateral sides of the first cover member 501 may be formed to partially surround the lateral sides of the electronic device so that the first cover member 501 may be detachably coupled to the electronic device.

The second cover member 503 may include one or more switch members 531 that operate mechanically, and a user may push the switch members 531 (e.g., perform a key input operation). The second cover member 503 may provide the function of an input device while operating in conjunction with the touch screen of the electronic device when the second cover member 503 is coupled to the front surface of the electronic device. Although a typical touch screen provides a haptic feedback function using a vibration motor embedded in an electronic device, the typical touch screen may provide a different feeling from a click feeling, etc. The second cover member 503 may include a dome switch, etc. to provide a click feeing of a conventional mechanical keypad to provide the feeling of the mechanical keypad while operating the touch screen. The second cover member 503 may be superposed on the front surface of the electronic device, for example, on the lower end region of the touch screen so that the user may perform a key input while viewing the rest of the touch screen. Further, the second cover member 503 may be mounted to partially surround the rear surface of the first cover member 501, and, in this state, the whole touch screen is visible so that the user can use the whole touch screen. In addition, the first cover member 501 may include side parts 511 a that extend to surround the lateral sides of the electronic device. The lateral sides of the second cover member 503 may be coupled to the first cover member 501 while surrounding the side parts 511a. The lateral sides of the second cover member 503 may be formed to deform away from each other so that the lateral sides of the second cover member may be separated from the first cover member 501.

As described above, the second cover member 503 may be provided to be selectively detachable while facing one of the surfaces of the first cover member 501. When the second cover member 503 is disposed on the front surface of the electronic device, the user can more accurately and rapidly input information using the second cover member 503, and when the second member 503 is disposed on the rear surface of the first cover member 501, the interference of the second cover member 503 can be prevented when the user uses the whole touch screen.

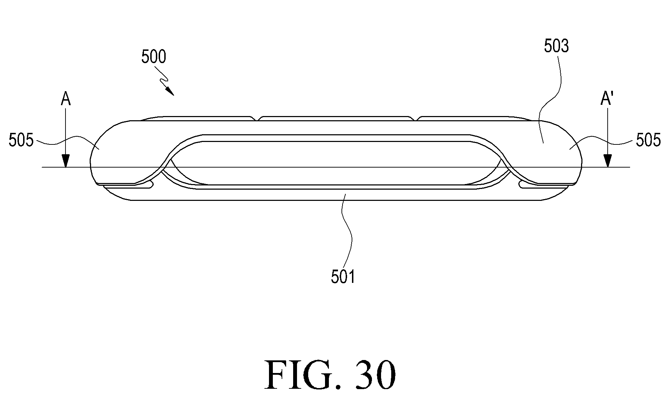

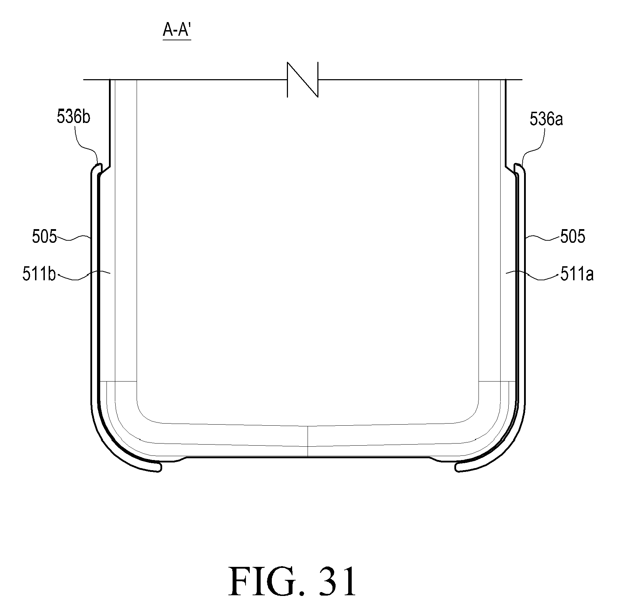

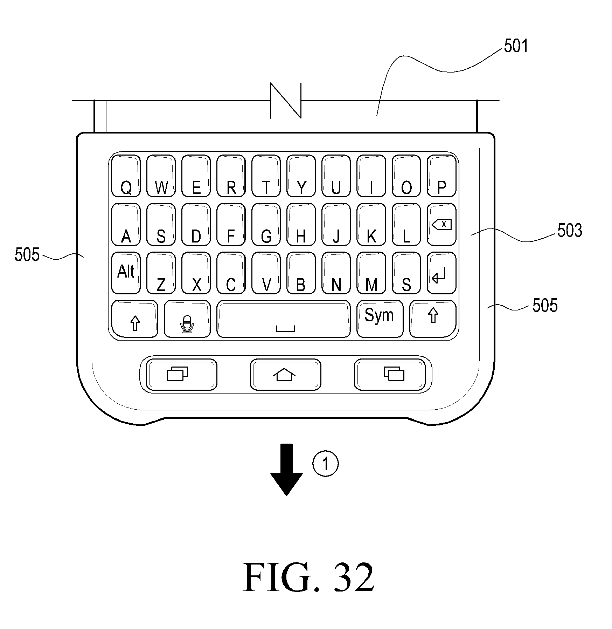

FIG. 30 is a side view of the cover, according to the embodiment of the present disclosure, when viewed in a different direction, FIG. 31 is a sectional view taken along line A-A' of the cover illustrated in FIG. 30 according to various embodiments of the present disclosure, and FIG. 32 is a view of the cover of FIG. 30 to which an external force is applied according to the embodiment of the present disclosure.

Referring to FIGS. 30 to 32, a cover 500, according to the embodiment of the present disclosure, may include fixing parts 505 that form the lateral sides of the second cover member 503.

The fixing parts 505 may extend from the second cover member 503 and may be coupled to surround a part of the first cover member 501, for example, the side parts 511a and 511b of the first cover member 501. Portions 536a and 536b of the fixing parts, for example, end portions of the fixing parts may be formed in a hook shape and may be engaged with the upper portions of the lateral sides (for example, the side parts 511a and 511b) of the first cover member 501 while the second cover member 503 is coupled to the first cover member 501. The fixing parts 505 may restrict the second cover member 503 from moving while being coupled to the first cover member 501. For example, the portions 536a and 536b of the fixing parts may be engaged with the upper portions of the side parts 511a and 511b to restrict the second cover member 503 from sliding in a first direction (e.g., the direction toward the lower side of the electronic device with respect to the front surface of the electronic device). The fixing parts 505 may prevent the home key 11c from being scratched by restricting the sliding of the second cover member 503 while the first and second cover members 501 and 503 are mounted on the electronic device 10.

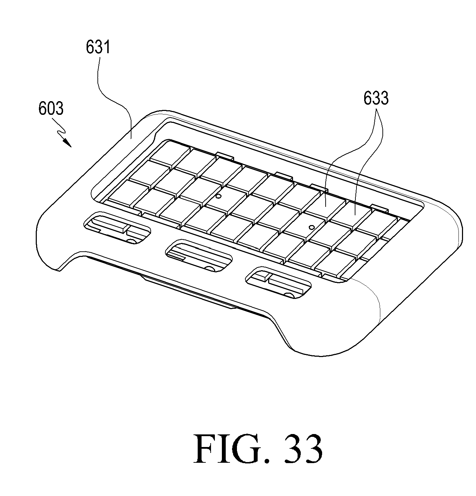

FIG. 33 is a view illustrating a keypad housing and switch members of a cover according to various embodiments of the present disclosure.

Referring to FIG. 33, a second cover member 603 of the cover, according to the various embodiments of the present disclosure, may include a keypad housing 631 and the switch members 633 mounted on the keypad housing 631.

Since the second cover member 603 of the cover may be detachably coupled to a first cover member by moving the lateral sides of the second cover member 603 away from each other, the switch members 633 are likely to be separated from the keypad housing 631. Further, the switch members 633 may be separated from the keypad housing 631 by a user's repetitive press of the switch members 633.

A means or method for solving the problems will be described below with reference to the accompanying drawings.

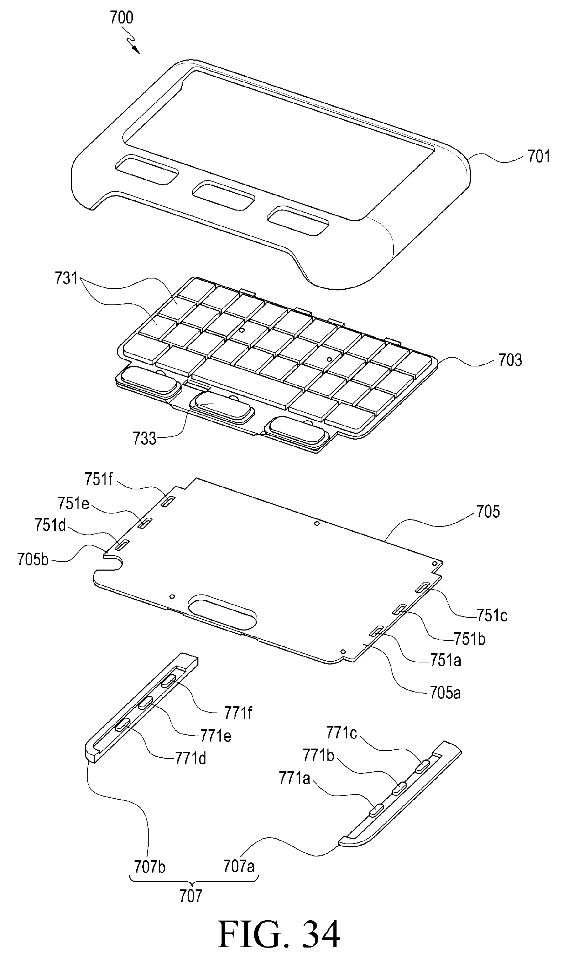

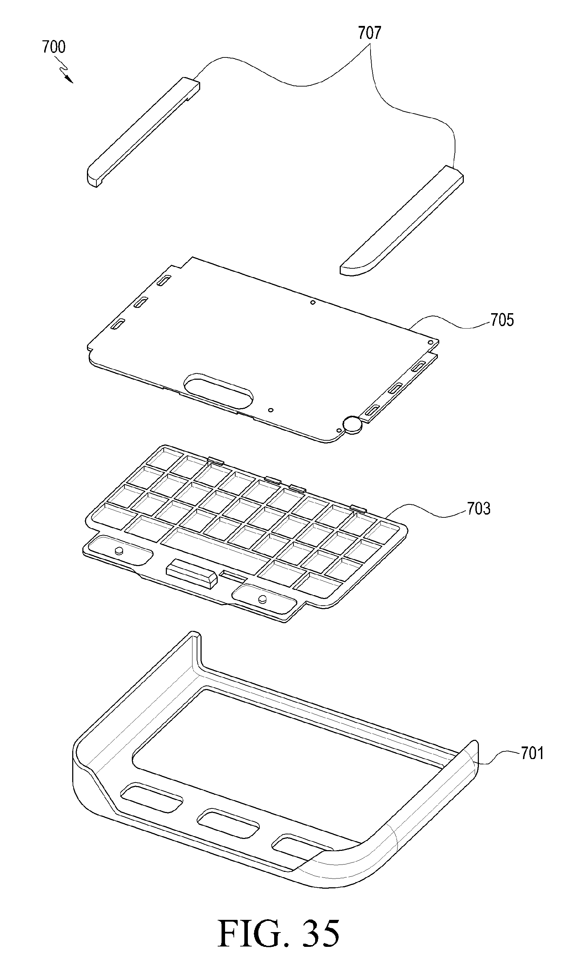

FIG. 34 is an exploded perspective view of a second cover member of a cover according to an embodiment of the present disclosure and FIG. 35 is a different exploded perspective view of the second cover member of the cover of FIG. 34 according to the embodiment of the present disclosure,.

Referring to FIGS. 34 and 35, a second cover member 700 of the cover, according to the embodiment of the present disclosure, may include a keypad housing 701, a keypad plate 703 on which switch members 731 are mounted, a circuit board 705, and support members 707.

The keypad plate 703 may be mounted in the keypad housing 701, and the switch members 731 and a home key 733 may be arranged on one surface of the keypad plate 703.

The circuit board 705 may be coupled to the surface of the keypad plate 703. Further, dome switches (not illustrated) may be provided between the switch members 731 and the circuit board 705 to provide a click feeling to a user when being pressed by the operation of the switch members 731. The circuit board 705 may have a plurality of insertion holes 751a, 751b, 751c, 751d, 751e, and 751f formed in end portions 705a and 705b thereof, and protrusions 771a, 771b, 771c, 771 d, 771e, and 771f of the support members 707, which will be described below, may be inserted into the insertion holes 751a to 751f, respectively. The insertion holes 751a to 751f may have a slit shape, but without being limited thereto, may have various shapes, such as a circular shape, etc.

Each of the support members 707 may be coupled to the keypad housing 701 while supporting a part of the circuit board (for example, one end portion of the circuit board). For example, the switch members 731 and the circuit board 705 may be provided between the keypad housing 701 and the support members 707. The support members 707 may include the first support member 707a and the second support member 707b that support the end portions 705a and 705b of the circuit board, respectively. The first and second support members 707a and 707b may have protrusions 771a to 771f that correspond to the insertion holes 751a to 751f, respectively, and the protrusions 771a to 771f may be inserted into the insertion holes 751a to 751f, respectively. The protrusions 771a to 771f may be attached to the keypad housing 701. The support members 707 may support the circuit board 705 to prevent the circuit board 705 from being separated from the keypad housing 701 in the direction in which a user presses the switch members 731.

A process in which the support members 707 are attached to the keypad housing 701 while supporting the circuit board 705 will be described below with reference to the accompanying drawings.

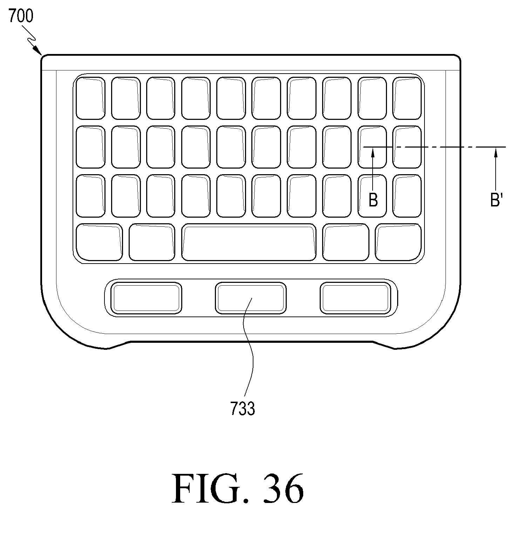

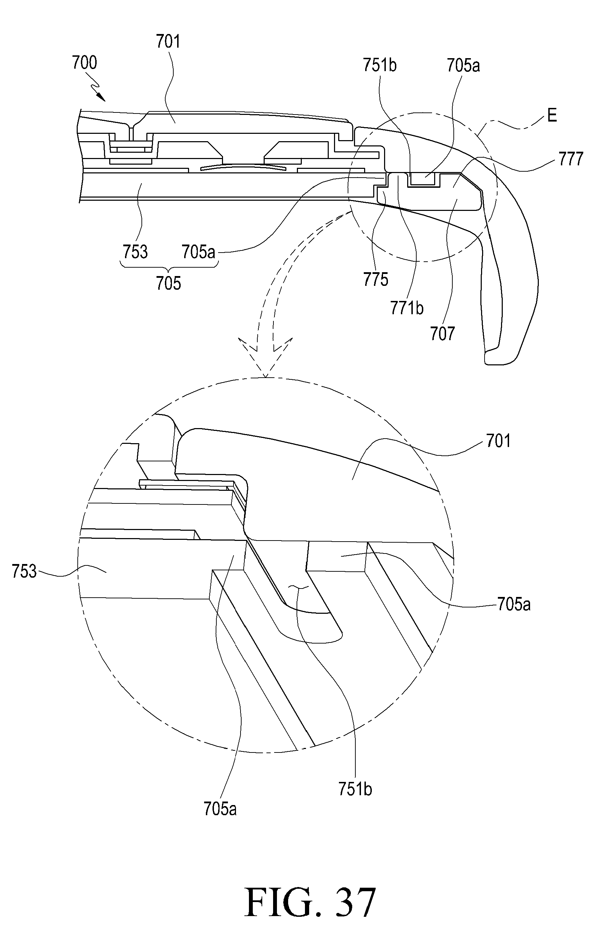

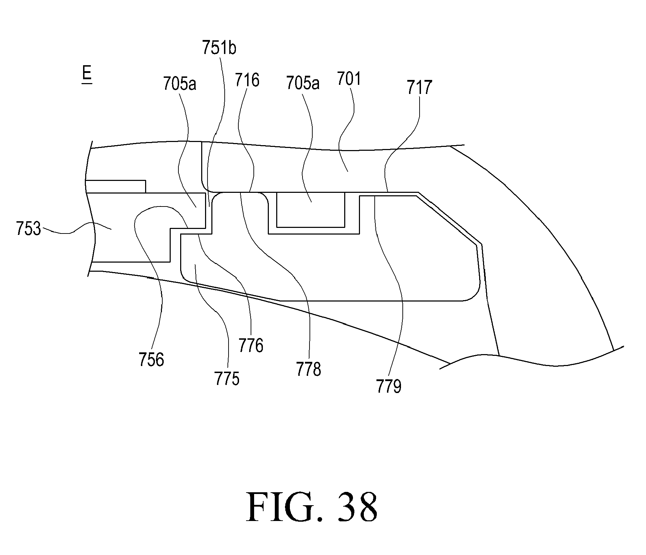

FIG. 36 is a front view of a second cover member of a cover according to the embodiment of the present disclosure, FIG. 37 is a sectional view taken along line B-B' of the second cover member illustrated in FIG. 36 according to various embodiments of the present disclosure, and FIG. 38 is an enlarged view of the portion E illustrated in FIG. 37 according to various embodiments of the present disclosure.

Referring to FIGS. 36 to 38, a second cover member 700 may include a circuit board 705 having a circuit board body 753. The circuit board body 753 faces the switch members 731 and an end portion 705a extends from the circuit board body 753. The end portion 705a of the circuit board may have a smaller thickness than the circuit board body 753.

The second cover member 700 includes support members 707. Each of the support members 707 may include a support body 775 that supports the end portion 705a of the circuit board and an extension 777 that extends from the support body 775. The support body 775 may have a second support surface 776 that makes contact with a first support surface 756 of the end portion 705a of the circuit board. An increase in the thickness of the second cover 700 may be restricted by making the thickness of the circuit board 705 or the support member 707 in the area where the circuit board 705 and the support member 707 overlap each other smaller than those in the other parts. For example, the end portion 705a of the circuit board may have a smaller thickness than the circuit board body 753, and a part of the support member 707 (for example, the support body 775) is disposed to overlap with the end portion of the circuit board, thereby restricting an increase in the thickness of the second cover member 700. The support member 707 may support the end portion 705a of the circuit board to prevent an increase in the thickness of the whole second cover member. As described above, at least one protrusion 771b may be formed on one surface of the support body 775. Among the protrusions, the protrusion 771b may be attached to the keypad housing 701 while being inserted into the insertion hole 751b. Referring back to FIG. 34, the protrusions 771a to 771f may be attached to the keypad housing 701 while being inserted into the insertion holes 751 a to 751f, and the insertion hole 751b and the protrusion 771b will be described as an example of the insertion holes and the protrusions in this embodiment. Referring to FIGS. 36 to 38, the protrusion 771b may be attached to the keypad housing 701 through an ultrasonic welding method. In the ultrasonic welding method, ultrasonic welding may be performed on the area of the keypad housing 701 that corresponds to the insertion hole 751b, and the protrusion 771b may be attached to the area where the ultrasonic welding has been performed via the insertion hole 751b. For example, ultrasonic welding may be performed on a first bonding surface 716 that makes contact with the protrusion 771b, and a second bonding surface 778 of the protrusion 771b may be bonded to the first bonding surface of the keypad housing 701. Further, ultrasonic welding may be performed on a third bonding surface 717 that makes contact with the extension 777, and a fourth bonding surface 779 of the extension 777 may be bonded to the third bonding surface 717 of the keypad housing 701. However, the method in which the protrusion 771b or the extension 777 is attached to the keypad housing 701 may include various methods, such as a method using an adhesive tape or an adhesive, a thermal welding method, etc., without being limited to the ultrasonic welding method.

Since the protrusion 771b and the extension 777 are attached to the keypad housing 701 while the support body 775 supports the end portion 705a of the circuit board, the support member 707 can prevent the circuit board 705 from being separated in the direction toward the rear surface of the keypad housing 701. Further, since the protrusion 771b is inserted into the insertion hole 751b while the support body 775 supports the end portion 705a of the circuit board, the circuit board 705 can be more securely coupled to the support member 707. In addition, since the protrusion 771b is inserted into the insertion hole 751b, it is possible to prevent the circuit board 705 from being separated from the support member 707 even when the second cover member 707 is drawn outward in order to detach the second cover member 700 from the first cover member.

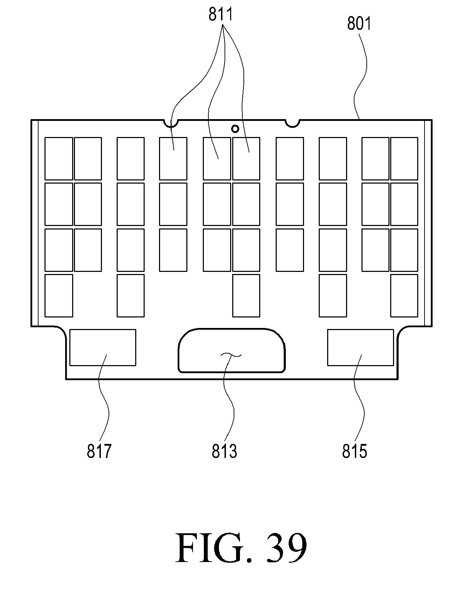

FIG. 39 is a rear view of a circuit board of a cover according to an embodiment of the present disclosure.

Referring to FIG. 39, the cover, according to an embodiment of the present disclosure, may include the circuit board 801, and conductive pads 811 may be attached to one surface of the circuit board 801. The conductive pads 811 may be arranged to face the keypad plate 703 and the switch members 731 described above with reference to FIGS. 36 to 38. The conductive pad 811 that corresponds to one of the dome switches operated by the press of the switch members 731 may be electrically connected to the circuit board 801. The electromagnetic property, for example the capacitance, of the conductive pad 811 may vary according to whether the conductive pad 811 is electrically connected to the circuit board 801.

Further, the circuit board 801 may have a hole 813 that corresponds to the home key of the electronic device and may include first and second pads 815 and 817 that are symmetric to each other with respect to the hole 813. The first and second pads 815 and 817 may be formed of a material similar to that of the conductive pad 811 so that the first and second pads may have electric conductivity. The first and second pads 815 and 817 may be attached to the circuit board 801 while being arranged in positions that correspond to keys (for example, a forward key and a back key, etc.) disposed on the left and right sides of the home key of the electronic device. The first and second pads 815 and 817 may be electrically connected to the circuit board 705 by the press of the keys.

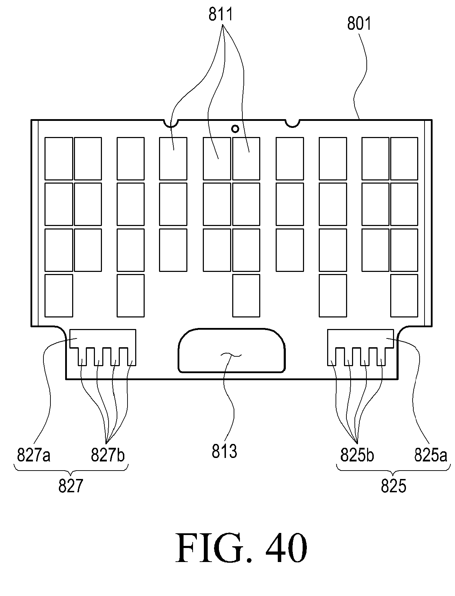

FIG. 40 is a rear view of a circuit board of a cover according to an embodiment of the present disclosure.

Referring to FIG. 40, first and second pads 825 and 827 may be provided adjacent to the lower end region of the electronic device 10. An antenna (not illustrated) may be generally provided in the lower end region of the electronic device 10, or inside the lower end region. When the first and/or second pad 825 and/or 827 is disposed in the place where the antenna device of the electronic device is provided, the first pad 825 may include a first connecting part 825a and first extensions 825b extending from the first connecting part 825a so as to not affect the transmission/reception performance of a radiated signal (for example, a high-frequency signal). The first connecting part 825a may be electrically connected to the circuit board 801. The first extensions 825b may extend from the first connecting part 825a while being spaced apart from each other. The second pad 827 may include a second connecting part 827a and second extensions 827b extending from the second connecting part 827a. The second connecting part 827a may be electrically connected to the circuit board 801. The second extensions 827b may extend from the second connecting part 827a while being spaced apart from each other. The second pad 827 may have a shape corresponding to the first pad 825, or a shape symmetric to the first pad 825 with respect to the hole 813. However, the second pad 827 is not limited thereto.

The first or second extensions 825b or 827b may have a space therebetween, and a high-frequency signal of the antenna device may be radiated to the outside through the spaces. Namely, the first and second pads 825 and 827 include the first and second extensions 825b and 827b that form the spaces, and hence have a smaller total area than the first and second pads 815 and 817 so that the high-frequency signal can be more effectively radiated to the outside.

As described above, a cover of an electronic device, according to various embodiments of the present disclosure, may include a rear cover mounted on the rear surface of the electronic device and a cover that includes a plurality of keys and is detachably coupled to the rear cover, wherein the cover that includes the plurality of keys may be coupled to face one of the front and rear surfaces of the rear cover and may include one or more mechanically operated switch members.

According to various embodiments of the present disclosure, the cover that includes the plurality of keys may include a circuit board, a conductive layer formed on one surface of the circuit board, a plurality of dome switches arranged on the conductive layer to form the switch members, and conductive pads arranged on another surface of the circuit board opposite to the one surface to correspond to the dome switches, wherein the dome switches may be operated to connect the conductive pads corresponding thereto to the conductive layer.

The cover of the electronic device, according to the various embodiments of the present disclosure, may further include coupling grooves formed on the lateral sides of the rear cover, respectively, wherein the cover that includes the plurality of keys may be mounted to face the front surface of the rear cover while the lateral ends thereof are engaged with the coupling grooves.

According to various embodiments of the present disclosure, the coupling grooves may be formed in the longitudinal direction of the lateral sides of the rear cover, and the cover that includes the plurality of keys may be coupled to face the front surface of the rear cover while the lateral ends thereof are engaged with the coupling grooves through sliding.

According to various embodiments of the present disclosure, the cover that includes the plurality of keys may rotate while one of the lateral ends thereof is coupled to the coupling groove at one side so that the other of the lateral ends thereof may be inserted into and coupled to the coupling groove at the other side.

According to various embodiments of the present disclosure, the lateral ends of the cover that includes the plurality of keys may be coupled to the lateral ends of the rear cover so that the cover that includes the plurality of keys may be coupled to surround the rear surface of the rear cover.

According to various embodiments of the present disclosure, the lateral ends of the cover that includes the plurality of keys may slide along the lateral sides of the rear cover so as to be coupled thereto.

An electronic device, according to various embodiments of the present disclosure, may include the cover comprising the plurality of keys.

The electronic device, according to the various embodiments of the present disclosure, may further include a touch screen mounted on the front surface of the electronic device.

According to various embodiments of the present disclosure, the cover that includes the plurality of keys may be mounted to face a part of the touch screen, and virtual keys that correspond to the switch members of the cover that includes the plurality of keys may be implemented on the portion of the touch screen that is hidden by the cover that includes the plurality of keys.

The electronic device, according to the various embodiments of the present disclosure, may further include a first home key disposed on one side of the touch screen, wherein the cover that includes the plurality of keys may have a second home key that corresponds to the first home key.

According to various embodiments of the present disclosure, the second home key may be formed to correspond to a recess in the rear surface of the cover that includes the plurality of keys, and the first home key may be accommodated in the recess while the cover that includes the plurality of keys is coupled to face the touch screen.

According to various embodiments of the present disclosure, the touch screen may include a touch panel that detects an electromagnetic change of the conductive pads.

The electronic device, according to the various embodiments of the present disclosure, may further include a Hall sensor disposed on one side of the touch screen and a magnetic body disposed on the cover that includes the plurality of keys, wherein the Hall sensor may detect the magnetic field induced by the magnetic body while the cover that includes the plurality of keys is mounted to face the touch screen.

A method of controlling a screen of an electronic device, according to various embodiments of the present disclosure, may include detecting the attachment of a cover that includes a plurality of keys, configuring a screen to display the screen displayed on a touch screen in the remaining area other than the area of the cover comprising the plurality of keys, and displaying the configured screen in the remaining area.

The method, according to the various embodiments of the present disclosure, may further include, when the cover that includes the plurality of keys is attached, determining whether the attached cover that includes the plurality of keys is a cover that includes a plurality of keys that are unique to the electronic device, by using short-range communication.

The method, according to the various embodiments of the present disclosure, may further include, when a keypad cover is attached, determining whether the attached keypad cover is a keypad cover that is unique to the electronic device through NFC.

The keypad cover, according to various embodiments of the present disclosure, may include a music control cover (for example, a cover that includes play, pause, and stop icons).

According to various embodiments of the present disclosure, the detecting of the attachment of the cover that includes the plurality of keys may include detecting whether the cover that includes the plurality of keys is attached to the front or rear surface of the electronic device by using at least one of a Hall sensor and NFC.

According to various embodiments of the present disclosure, the configuring of the screen may include configuring a screen suitable for the remaining area by adjusting at least one of the size and layout of the displayed screen when the cover that includes the plurality of keys is attached to the front surface of the electronic device.

According to various embodiments of the present disclosure, the configuring of the screen may include configuring a screen by adjusting at least one of the size and layout according to the type of screen displayed on the touch screen, wherein the type includes at least one of an application, an icon, and an image.

An electronic device that controls a screen of a touch screen, according to various embodiments of the present disclosure, may include a touch screen that displays a screen and a controller that detects the attachment of a cover that includes a plurality of keys and configures a screen to display the screen displayed on the touch screen in the remaining area other than the area of the cover that includes the plurality of keys, wherein the touch screen may display the configured screen in the remaining area.

According to various embodiments of the present disclosure, when the cover that includes the plurality of keys is attached, the controller may determine whether the attached cover that includes the plurality of keys is a cover that includes a plurality of keys unique to the electronic device, by using NFC.

According to various embodiments of the present disclosure, the controller may determine whether the cover that includes the plurality of keys is attached to the front or rear surface of the electronic device, by using at least one of a Hall sensor and NFC.

According to various embodiments of the present disclosure, the controller may configure a screen suitable for the remaining area by adjusting at least one of the size and layout of the displayed screen when the cover that includes the plurality of keys is attached to the front surface of the electronic device.

According to various embodiments of the present disclosure, the controller may configure a screen by differently adjusting at least one of the size and layout according to the type of screen displayed on the touch screen, wherein the type may include at least one of an application, an icon, and an image.

A cover, according to various embodiments of the present disclosure, may include a first cover member, a second cover member provided to be selectively detachable while facing one of the surfaces of the first cover member and fixing parts formed on the second cover member and coupled to surround the lateral sides of the first cover member, wherein one end portion of each fixing part may be engaged with the upper portion of the lateral side of the first cover member to restrict the second cover member from moving downward while being mounted on the first cover member.

According to various embodiments of the present disclosure, the second cover member may include a keypad housing, switch members mounted on the keypad housing, a circuit board coupled to one surface of each switch member, and support members, each of which is coupled to the keypad housing while supporting one portion of the circuit board, wherein the fixing parts may be integrally formed with the lateral ends of the keypad housing, respectively.

According to various embodiments of the present disclosure, the circuit board may include a circuit board body that faces the switch members and an end portion of the circuit board that extends from the circuit board body and has a smaller thickness than the circuit board body.

According to various embodiments of the present disclosure, each of the support members may include a support body that supports the end portion of the circuit board and an extension that extends from the support body and makes contact with the inner surface of the keypad housing.

According to various embodiments of the present disclosure, the cover may further include at least one insertion hole formed in the end portion of the circuit board and at least one protrusion formed on one surface of the support body, wherein the support members may be attached to the keypad housing while the protrusion is inserted into the insertion hole.

An electronic device, according to various embodiments of the present disclosure, may include a housing that includes a first surface, a second surface opposite to the first surface, and side surfaces that surround the space between the first and second surfaces, a display exposed through the first surface of the housing, a first member that covers at least a part of the second surface of the housing and at least a part of the side surfaces, a second member that covers at least a part of the first surface of the housing and at least one other part of the side surfaces and includes a plurality of input keys for the display, a processor electrically connected to the display and the second member, and a storage unit electrically connected to the processor, wherein the storage unit may store instructions that, when being executed, allow the processor to receive user inputs for selecting at least some of the plurality of input keys and may display a user interface corresponding to the some or more input keys on at least a part of the display based on the user inputs, the first and second members may overlap each other when viewed from the side of the housing, and at least one end portion, or a protrusion, of one of the first and second members may be detachably coupled to a groove formed in the other of the first and second members.

According to various embodiments of the present disclosure, the electronic device may further include at least one sensor, and the instructions may allow the processor to detect whether the second member covers at least a part of the first surface of the housing.

According to various embodiments of the present disclosure, the instructions may allow the processor to display a screen on the whole display and display the screen in a selected area of the display based on the detection.

According to various embodiments of the present disclosure, the selected area may not overlap the second member when viewed from a point above the second member.

According to various embodiments of the present disclosure, the instructions may allow the processor to display a plurality of objects on the screen displayed on the whole display according to a first arrangement and display at least some of the plurality of objects on the screen displayed in the selected area according to a second arrangement based on the detection.

According to various embodiments of the present disclosure, the area where the at least one end portion, or the protrusion, of one of the first and second members is detachably coupled to the groove formed in the other of the first and second members may not at least partially overlap the selected area of the display when viewed from a point above the housing.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A cover of an electronic device comprising:
a rear cover mounted on a rear surface of the electronic device; and
a cover comprising a plurality of keys,
wherein the cover comprising the plurality of keys is coupled to face one of a front surface and a rear surface of the rear cover and is detachably coupled to the rear cover, and
wherein the cover comprising the plurality of keys comprises mechanically operated switch members.

2. The cover of the electronic device of claim 1, wherein the cover of the electronic device further comprises:
a circuit board;
a conductive layer formed on a first surface of the circuit board;
dome switches arranged on the conductive layer to form the switch members; and
conductive pads arranged on a second surface of the circuit board opposite to the first surface to correspond to the dome switches,
wherein the dome switches selectively connect the conductive pads to the conductive layer.

3. The cover of the electronic device of claim 1, further comprising:
coupling grooves formed on lateral sides of the rear cover,
wherein the cover comprising the plurality of keys is mounted to face the front surface of the rear cover while lateral ends thereof are engaged with the coupling grooves.

4. The cover of the electronic device of claim 3,
wherein the coupling grooves are formed in the longitudinal direction of the lateral sides of the rear cover, and
wherein the cover comprising the plurality of keys is coupled to face the front surface of the rear cover while the lateral ends thereof are engaged with the coupling grooves through sliding.

5. The cover of the electronic device of claim 3, wherein the cover comprising the plurality of keys rotates while one of the lateral ends thereof is coupled to the coupling groove at one side so that the other of the lateral ends thereof is inserted into and coupled to the coupling groove at the other side.

6. The cover of the electronic device of claim 1, wherein lateral ends of the cover comprising the plurality of keys are coupled to lateral ends of the rear cover and cover the rear surface of the rear cover, and
wherein the lateral ends of the cover comprising the plurality of keys slide along the lateral sides of the rear cover.

7. The cover of the electronic device of claim 1, wherein the cover comprising the plurality of keys is configured to cover a keyboard displayed by the electronic device, and
wherein the electronic device comprises:
a main body of the electronic device that is provided between the cover comprising the plurality of keys and the rear cover, and
wherein the electronic device further comprises:
a touch screen mounted on the front surface of the electronic device.

8. The cover of the electronic device of claim 7, wherein, the cover comprising the plurality of keys is mounted to face a part of the touch screen, and virtual keys that correspond to the switch members of the cover comprising the plurality of keys are implemented on the portion of the touch screen that is hidden by the cover comprising the plurality of keys.

9. The cover of the electronic device of claim 7, wherein the electronic device further comprises:
a first home key disposed on one side of the touch screen,
wherein the cover comprising the plurality of keys has a second home key that corresponds to the first home key, and
wherein the second home key is formed to correspond to a recess in the rear surface of the cover comprising the plurality of keys, and
wherein the first home key is accommodated in the recess while the cover comprising the plurality of keys is coupled to face the touch screen.

10. The cover of the electronic device of claim 7, wherein the touch screen comprises a touch panel configured to detect an electromagnetic change of the conductive pads.

11. The cover of the electronic device of claim 7, wherein the electronic device further comprises:
a Hall sensor disposed on one side of the touch screen; and
a magnetic body disposed on the cover comprising the plurality of keys,
wherein the Hall sensor detects the magnetic field induced by the magnetic body while the cover comprising the plurality of keys is mounted to face the touch screen.

12. An electronic device comprising:
a housing that comprises a first surface, a second surface opposite to the first surface, and side surfaces that surround the space between the first and second surfaces;
a display exposed through the first surface of the housing;
a first member that covers at least a part of the second surface of the housing and at least a part of the side surfaces;
a second member that covers at least a part of the first surface of the housing and at least one other part of the side surfaces and comprises a plurality of input keys for the display;
a processor connected to the display and the second member; and
a storage unit connected to the processor,
wherein the processor is configured to:
receive user inputs for selecting at least some of the plurality of input keys, and
display a user interface corresponding to the some or more input keys on at least a part of the display based on the user inputs,
wherein the first and second members overlap each other when viewed from the side of the housing, and
wherein at least one end portion, or a protrusion, of one of the first and second members is detachably coupled to a groove formed in the other of the first and second members.

13. The electronic device of claim 12,
wherein the electronic device further comprises at least one sensor, and
wherein the processor is further configured to detect whether the second member covers at least a part of the first surface of the housing.

14. The electronic device of claim 13, wherein the processor is further configured to display a screen on the whole display and display the screen in a selected area of the display based on the detection.

15. The electronic device of claim 14, wherein the selected area does not overlap the second member when viewed from a point above the second member.

16. The electronic device of claim 14, wherein the processor is further configured to:
display a plurality of objects on the screen displayed on the whole display according to a first arrangement, and
display at least some of the plurality of objects on the screen displayed in the selected area according to a second arrangement based on the detection.

17. The electronic device of claim 14, wherein the area where the at least one end portion, or the protrusion, of one of the first and second members is detachably coupled to the groove formed in the other of the first and second members does not at least partially overlap the selected area of the display when viewed from a point above the housing.
